# EUROPEAN PATENT APPLICATION

(11) **EP 3 467 760 A1**
(43) Date of publication of application: **10.04.2019**
(21) Application number: 17806781.5
(22) Date of filing: 01.06.2017
(51) Int. Cl.: G06Q 50/10, G06F 3/12, G06F 17/21, G06T 11/60

(54) **PRINT SERVER DEVICE, PRINTED MATTER CONSTRUCTION METHOD AND RECORDING MEDIUM**

(30) Priority: 03.06.2016 JP 2016111706
(71) Applicant: Amazing Day Inc., Tokyo 1410021 (JP)
(72) Inventor: NAGANUMA, Kohei, Tokyo 108-0074 (JP); KIMURA, Toshinori, Tokyo 108-0074 (JP)
(74) Representative: TBK
(86) International application number: PCT/JP2017/020411
(87) International publication number: WO 2017/209231

(57) **Abstract**

[Problem] To construct an incomplete printed matter using one or more pieces of component information that are present, before all the component information is present. [Solution] A print server device comprises: a printed matter identifier for identifying one printed matter; a printed matter construction information storage unit that stores printed matter construction information which includes two or more component identifiers identifying component information for constructing the printed matter identified by the printed matter identifier; a component information storage unit that stores two or more pieces of component information associated with the printed matter identifier; a component-related information receiving unit that receives, at different times, two or more pieces of component-related information, each having a component identifier and component information; a component information accumulation unit that accumulates, in the component information storage unit, the component information included in the received component-related information, in association with the component identifier paired with the component information; and a printed matter construction unit that, prior to gathering all component information corresponding to the two or more component identifiers paired with the printed matter identifier included in the printed matter construction information, constructs an incomplete printed matter using one or more pieces of component information stored in the component information storage unit.

## Description

### Technical Field

The present invention relates to a print server device or the like that constructs printed matter using received information.

### Background Art

In the related art, there is known a print server device that distributes and processes both normal printing and test printing in the same printing apparatus by setting a normal print condition and a test print condition such that normal print data and test print data generated from the same input data are printed using the same printing apparatus (for example, see Patent Document 1).

There is also known a Web service capable of receiving and printing input data (for example, see Non-Patent Document 1) .

### Citation List

### Patent Document

Patent Document 1: JP-A-2013-3827 (Page 1, Fig. 1, and the like)

### Non-Patent Document

Non-Patent Document 1: "Print On-line Shop PRINTPAC" [search date: June 1, 2016], the Internet [URL:http://www.printpac.co.jp/]

### Summary of the Invention

### Technical Problem

However, in the related art described above, it was not possible to construct incomplete printed matter before all pieces of input data (two or more pieces of component information for constructing one printed matter) are prepared. For this reason, it took time to finish constructing a complete product after preparing all pieces of the component information.

In this regard, an object according to a first aspect of the invention is to implement a print server device or the like capable of constructing incomplete printed matter using one or more pieces of prepared component information before all of two or more pieces of component information included in the printed matter are prepared.

In the related art, rendering is not performed for each component. For example, the rendering starts after all of two or more pieces of component information included in one printed matter are prepared. For this reason, in the related art, it took time to finish constructing a complete product after the component information is fully prepared.

In the related art, if a complete product is constructed, for example, after all of two or more pieces of component information included in one printed matter are prepared, also including rendering of the component, there was a problem that a load of the apparatus temporarily concentrates.

In this regard, an object according to a second aspect of the invention is to reduce time for constructing a complete product after the component information is fully prepared and to implement load sharing of the apparatus by processing the rendering for one or more components in advance.

### Solution to Problem

According to a first aspect of the invention, there is provided a print server device including: a printed matter construction information storage unit that stores printed matter construction information containing a printed matter identifier for identifying one printed matter and two or more component identifiers for identifying component information for constructing the printed matter identified by the printed matter identifier; a component information storage unit that stores two or more pieces of component information in association with the printed matter identifier; a component-related information receiving unit that receives each of two or more pieces of component-related information having a component identifier and component information identified by the component identifier at different timings; a component information accumulation unit that accumulates component information contained in the component-related information received by the component-related information receiving unit in the component information storage unit in association with the component identifier paired with the component information; and a printed matter construction unit that constructs an incomplete printed matter using one or more pieces of component information stored in the component information storage unit and identified by the printed matter identifier before all pieces of component information that are included in the printed matter identified by the printed matter identifier contained in the printed matter construction information and correspond to the two or more component identifiers paired with the printed matter identifier contained in the printed matter construction information are prepared.

As a result, it is possible to construct an incomplete printed matter using one or more pieces of prepared component information before all of two or more pieces of component information included in one printed matter are prepared. For this reason, it is possible to shorten the time for constructing a complete product after all pieces of the component information are prepared.

In addition to the first aspect, in the print server device according to a second aspect of the invention, the printed matter construction unit constructs the incomplete printed matter as the incomplete printed matter construction condition is satisfied.

As a result, it is possible to construct the incomplete printed matter at a timing based on the incomplete printed matter construction condition.

In addition to the second aspect, in the print server device according to a third aspect of the invention, the incomplete printed matter construction condition includes a condition that the component-related information receiving unit receives the component-related information.

As a result, the incomplete printed matter can be constructed in response to receiving the component-related information. In addition, it is possible to construct a new incomplete printed matter closer to the complete printed matter whenever the component-related information is received.

In addition to any one of the first to third aspects, in the print server device according to a fourth aspect of the invention, the printed matter has a fixed region and a variable region, and the incomplete printed matter construction condition includes a condition that component information contained in the component-related information received by the component-related information receiving unit is only the component information corresponding to the fixed region.

As a result, it is possible to construct the incomplete printed matter only when the component information included in the received component-related information is only the component information corresponding to the fixed region.

In addition to any one of the first to fourth aspects, in the print server device according to a fifth aspect of the invention, the printed matter has a fixed region and a variable region, the incomplete printed matter construction condition includes a condition that there is two or more pieces of component information corresponding to a single variable region out of the component information contained in the component-related information received by the component-related information receiving unit, and the printed matter construction unit constructs two or more incomplete printed matters for each of the two or more pieces of component information by arranging each of the two or more pieces of component information in the variable region.

As a result, it is possible to construct two or more types of incomplete printed matters by arranging different pieces of component information in the variable region.

In addition to any one of the first to fifth aspects, in the print server device according to a sixth aspect of the invention, the incomplete printed matter construction condition includes a condition regarding the printed matter, and the printed matter construction unit may construct an incomplete printed matter or may not construct the incomplete printed matter depending on the printed matter.

As a result, it is possible to construct the incomplete printed matter only for a specific printed matter.

In addition to the sixth aspect, in the print server device according to a seventh aspect of the invention, the printed matter construction information has an attribute value of the printed matter, the incomplete printed matter construction condition includes a condition regarding an attribute value of the printed matter, and the printed matter construction unit may construct an incomplete printed matter or may not construct the incomplete printed matter depending on the attribute value of the printed matter.

As a result, it is possible to construct the incomplete printed matter only for a printed matter in which printed matter construction information has a specific attribute value.

In addition to any one of the first to seventh aspects, in the print server device according to an eighth aspect of the invention, the printed matter construction unit constructs a complete printed matter using a lastly constructed incomplete printed matter and component information contained in component-related information lastly received by the component-related information receiving unit.

As a result, it is possible to construct a complete printed matter using the incomplete printed matter.

The print server device according to a ninth aspect of the invention includes: a component information storage unit that stores two or more pieces of component information in association with a printed matter identifier for identifying one printed matter; a component image storage unit that stores two or more component images corresponding to the two or more pieces of component information; a rendering unit that performs rendering for each of one or more pieces of component information stored in the component information storage unit to acquire a component image as an image of the component; a component image accumulation unit that accumulates the component image acquired by the rendering unit in the component image storage unit; and a printed matter construction unit that constructs a printed matter by combining two or more component images stored in the component image storage unit.

In this configuration, by performing rendering for one or more components before all of two or more components necessary to completion are prepared, it is possible to expeditiously construct a complete printed matter after all pieces of component information are prepared.

In addition to the ninth aspect, in the print server device according to a tenth aspect of the invention, the rendering unit determines whether or not rendering is performed for the component information on the basis of a rendering condition as a condition for performing rendering, and performs rendering for the component information to acquire the component image as the rendering condition is satisfied.

In this configuration, by performing rendering for each component before all of two or more pieces of component information included in one printed matter are prepared, it is possible to shorten the time for constructing a complete product after all pieces of the component information are prepared.

In addition to the tenth aspect, in the print server device according to an eleventh aspect of the invention, the rendering condition is a condition regarding a timing.

In this configuration, since the rendering for the component information is performed at a suitable timing, it is possible to shorten the time for constructing a complete product after all pieces of component information are prepared.

In addition to the tenth or eleventh aspect, in the print server device according to a twelfth aspect of the invention, the rendering condition includes a condition regarding an attribute value of the component, and the rendering unit may perform rendering or may not perform rendering depending on the attribute value of the component.

In this configuration, it is possible to suitably perform rendering in advance depending on the attribute value of the component.

In addition to any one of the ninth to twelfth aspect, the print server device according to a thirteenth aspect of the invention further includes a printed matter construction information storage unit that stores printed matter construction information representing a configuration of the complete printed matter, the information containing a printed matter identifier and two or more component identifiers for identifying component information for constructing the printed matter identified by the printed matter identifier, and the printed matter construction unit constructs an incomplete printed matter by combining one or more component images that are stored in the component image storage unit and correspond to one or more pieces of component information identified by the printed matter identifier before all pieces of component information that are included in the printed matter identified by the printed matter identifier contained in the printed matter construction information and correspond to two or more component identifiers paired with the printed matter identifier contained in the printed matter construction information are prepared.

In this configuration, it is possible to construct an incomplete printed matter by combining one or more component images corresponding to one or more pieces of the prepared component information before all pieces of component information are prepared. For this reason, it is possible to shorten the time for constructing a complete product after all pieces of component information are prepared.

### Advantageous Effects of the Invention

According to the invention, it is possible to implement a print server device or the like capable of expeditiously constructing a complete printed matter using one or more pieces of the prepared component information before all of two or more pieces of component information included in one printed matter are prepared.

According to the invention, it is possible to implement load sharing in the print server device or the like.

### Brief Description of the Drawings

Fig. 1 is a conceptual diagram illustrating a print system according to a first embodiment.
Fig. 2 is a block diagram illustrating a print server device 1.
Fig. 3 is a diagram illustrating a flowchart for describing operations of the print server device 1.
Fig. 4 is a data structure diagram illustrating printed matter construction information in the specific example.
Fig. 5 is a data structure diagram illustrating component information.
Fig. 6 is a diagram illustrating an exemplary construction of a printed matter X.
Fig. 7 is a diagram illustrating an exemplary construction of a printed matter Y.
Fig. 8 is a data structure diagram illustrating print layout information.
Fig. 9 is a diagram illustrating an exemplary appearance of a server 900.
Fig. 10 is a diagram illustrating an exemplary internal construction of the server 900.
Fig. 11 is a block diagram illustrating a print server device according to a second embodiment.
Fig. 12 is a flowchart illustrating operations of the print server device.
Fig. 13 is a data structure diagram illustrating the component information.
Fig. 14 is a data structure diagram illustrating the component image.

### Mode for Carrying Out the Invention

An embodiment of a print server device or the like will now be described with reference to the accompanying drawings. Note that like elements or steps denoted by like reference numerals throughout the embodiments provide similar operations, and they will not be described repeatedly for simplicity purposes.

### (First Embodiment)

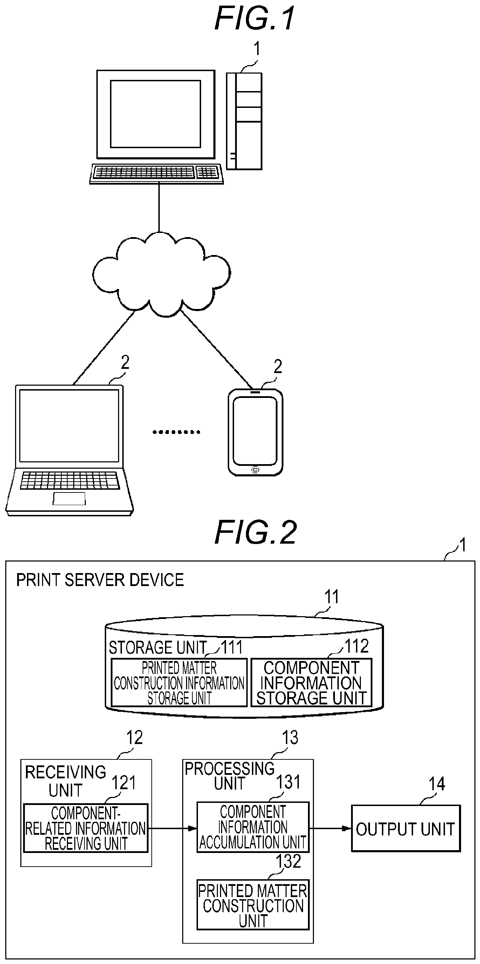

Fig. 1 is a conceptual diagram illustrating a print system according to this embodiment. This print system has a print server device 1 or one or two or more terminal devices 2. The print server device 1 and each of one or more terminal devices 2 (hereinafter, simply referred to as a "terminal device 2") are communicably connected to each other via a network or communication line such as a local area network (LAN) or the Internet. The print server device 1 may include, for example, a server of a company who operates this print system, a cloud server, or the like without limiting its type. The terminal device 2 may include, for example, a personal computer (PC) of a user who uses this print system, a tablet terminal, or the like without limiting its type.

This print system will now be described in short. Each of one or more terminal devices 2 may transmit two or more pieces of component information for constructing one printed matter at different timings. The printed matter refers to content to be printed by a printer, a print machine, or the like. The content includes, for example, print data for printing a photo album, a magazine, a catalog, a leaflet, or the like, including one or more types of information regarding images or texts. The image is, for example, image data such as a photograph, illustration, and a computer graphic (CG). The printed matter may be one copy or two or more copies. That is, even when two or more copies of the printed matter are included, they may simply be referred to as "printed matter". In addition, there is no limitation in the type or data structure of the printed matter. Hereinafter, two or more pieces of information (such as image data or text data) for constructing one printed matter may be referred to as "component information" in some cases. Note that the "component information" is information for constructing the printed matter. The component information includes, for example, image data, text data, a page, a group of pages (such as chapters and theories) as a set of pages, layout information, information representing an attribute value (such as color) of the printed matter, codes such as QR codes (registered trademark) and barcodes, shape information such as a package, a serial number, component designation information, and the like. The layout information is typically information for arranging the component information in the printed matter. The layout information may contain information on the number of copies or a template. The template is information for constructing a background of the page of the printed matter. The template includes information on the printing method such as a design of the background of the page, fixed parts arranged in the page, a size of the page, a type of the paper to the printed, and a print type. The layout information may also include so-called order data. The order data is information for ordering the printed matter. The order data includes, for example, the number of copies, data of the component information included in each copy, data for designating a sequence of pages, and the like. In addition, the serial number is, for example, a unique number of the printed matter, information for determining an algorithm for generating the serial number, and the like. The information for determining the algorithm for generating the serial number includes, for example, the number to be incremented (such as "1"), an arithmetic expression, or the like. Furthermore, the component designation information is information for designating a component, such as a component identifier for identifying a component. Typically, the print server device holds the component information (such as image data and text data) specified by the component designation information. Moreover, the printed matter may not be a product completed by itself. For example, the printed matter may include only a part of a booklet, only a top cover of the box, or the like.

The "transmission at different timings" refers to transmission of each of two or more pieces of the component information to the print server device 1 at different timings. For example, the terminal device 2 first transmits a part of the component information out of two or more pieces of the component information and then transmits the remaining component information. The time from transmission of a certain piece of the component information to transmission of the next piece of component information may include, for example several days, several months, or any period of time without limiting its length.

The print server device 1 receives two or more pieces of component information included in one printed matter at different timings and constructs an incomplete printed matter using one or more pieces of the prepared component information before the component information for constructing one printed matter is fully prepared. In the following description, a process of constructing the incomplete printed matter in this manner is referred to as an "incomplete printed matter construction process" or a "partial construction process" in some cases.

The print server device 1 may execute the incomplete printed matter construction process, for example, in response to receiving the component information. In addition, the print server device 1 may construct a complete printed matter using the latest incomplete printed matter obtained through the incomplete printed matter construction process (for example, the prepared printed matter except for the last component) and at least the component information lastly received.

The printed matter may have a fixed region and a variable region. The fixed region refers to a region in which the component information arranged in this region is defined as one piece of component information. The variable region refers to a region in which the component information arranged in this region is any of two or more pieces of the component information. For example, the fixed region may be a template, and the variable region may be a region where image data, text data, or the like are arranged. That is, the fixed region and the variable region may partially overlap each other. For example, the variable region may exist inside the fixed region, and the fixed region may exist inside the variable region. The print server device 1 may execute the partial construction process in a case where only the component information corresponding to the fixed region is prepared, and may not execute the partial construction process in a case where the component information corresponding to the variable region is included. In addition, in case where two or more pieces of component information corresponding to one variable region exist in the prepared component information, the print server device 1 may construct two or more incomplete printed matters in which different pieces of component information are arranged in the variable region.

In the print server device 1, the partial construction process may be executed or may not be executed depending on the printed matter. For example, the print server device 1 may automatically determine whether or not the partial construction process is executed depending on the attribute value of the printed matter. Note that, in a case where the partial construction process is not executed, the print server device 1 typically constructs the printed matter of the complete product when all pieces of the component information necessary to complete one printed matter are prepared.

Fig. 2 is a block diagram illustrating the print server device 1. The print server device 1 has a storage unit 11, a receiving unit 12, a processing unit 13, and an output unit 14. The storage unit 11 has a printed matter construction information storage unit 111 and a component information storage unit 112. The receiving unit 12 has a component-related information receiving unit 121. The processing unit 13 has a component information accumulation unit 131 and a printed matter construction unit 132.

The storage unit 11 may store various types of information. Various types of information may include, for example, printed matter construction information, identification information for identifying the print server device 1 (such as a MAC address or an IP address), an incomplete printed matter described below, a complete printed matter, an incomplete printed matter construction condition described below, or the like.

The printed matter construction information storage unit 111 stores printed matter construction information as information for constructing the printed matter. The printed matter construction information contains a printed matter identifier for identifying one printed matter and two or more component identifiers for identifying component information for constructing the printed matter identified by the printed matter identifier. Note that the printed matter identifier may include any information such as a name of the printed matter, a numeric string, or an alphabetic string as long as it can identify the printed matter. In addition, the component identifier may include any information such as a name of the component, a numeric string, or an alphabetic string as long as it can identify the component. Furthermore, one component identifier may contain the printed matter construction information appearing several times in one or two or more pieces of the printed matter construction information.

Typically, the printed matter construction information further contains layout information representing a layout of each of two or more pieces of the component information (allocation on a page), and one printed matter basically has two or more pieces of the component information and layout information. However, the layout information may also be stored in the storage unit 11, for example, in association with printed matter-related information without limiting to a case where it is contained in the printed matter construction information. In addition, the layout information may be omitted in a case where two or more pieces of component information having sequence are simply arranged side by side. Note that a data structure or specific examples of the layout information will be described below.

The printed matter construction information may have an attribute value of the printed matter. The attribute value refers to a value regarding a property of the printed matter or a value set for the printed matter. The attribute value may include, for example, the number of pages, the number of copies, information regarding a delivery destination (such as a name of the delivery destination or an identifier of the delivery destination), information indicating the type of the printed matter (such as a leaflet or a magazine), information for designating a manufacturing factory, information for designating paper quality of the printed matter, information for designating a shape of the printed matter, information on the printing process (such as the number of processes, presence or absence of post-processing), and the like.

The component information storage unit 112 may store two or more pieces of component information in association with the printed matter identifiers. The component information stored in the component information storage unit 112 may contain information generated by the processing unit 13 described below.

The receiving unit 12 receives various types of information. Various types of information include, for example, component-related information, information for registering members in the print system, information for ordering the printed matter, and the like.

The component-related information receiving unit 121 receives component-related information containing the component identifier and the component information identified by the component identifier. The component-related information receiving unit 121 can receive two or more pieces of component-related information at different timings. The "receiving at different timings" means that two or more pieces of component information are received from the terminal device 2 at different timings. For example, the component-related information receiving unit 121 may sequentially receive two or more pieces of component information or may first receive a part of the component information out of the two or more pieces of component information and then receive the remaining component information. Alternatively, needless to say, the component-related information receiving unit 121 may receive the component-related information from each of two or more terminal device 2 at different timings. In addition, a time interval for the component-related information receiving unit 121 to receive the component-related information may be set to any period of time such as three hours, two days, or three weeks without a limitation.

The processing unit 13 executes various processings. Various processings include, for example, determination on whether or not the component-related information receiving unit 121 receives the component-related information, receiving of a check operation, a construction process, and the like. Various processings may include, for example, a process of creating the component information. The processing unit 13 may create, for example, codes such as QR codes (registered trademark) or barcodes using specific information (such as a user identifier for identifying a user and a printed matter identifier) or may create a unique printed matter identifier.

The component information accumulation unit 131 accumulates the component information contained in the component-related information received by the component-related information receiving unit 121 in the component information storage unit 112 in association with the component identifier paired with this component information.

The printed matter construction unit 132 constructs the incomplete printed matter using one or more pieces of component information identified by the printed matter identifier and stored in the component information storage unit 112 before all pieces of the component information that are included in the printed matter identified by the printed matter identifier contained in the printed matter construction information and correspond to two or more component identifiers paired with the printed matter identifier contained in the printed matter construction information are prepared. The "construction" means an operation of arranging images or texts based on one or more pieces of component information inside a page of the printed matter and making the printed matter in a printable state. The printed matter construction unit 132 constructs the incomplete printed matter by arranging one or more pieces of component information typically in a page depending on the layout information included in the printed matter construction information. Alternatively, default layout information may be employed, or the component information having sequence may be arranged sequentially. There is no limitation in the method of constructing the incomplete printed matter. Note that the incomplete printed matter may include, for example, a PDF file, a job definition format (JDF) file, an image file, a file written in a script such as postscript, or the like of the printed matter of the complete product, and there is no limitation in its structure.

The printed matter construction unit 132 may arrange newly received component information in the incomplete printed matter created in the past depending on a position indicated by the layout information to form the incomplete printed matter. The layout information contains, for example, designation of a page on which the component information is arranged and designation of the position in the page. Note that, in this case, it is preferable that the printed matter construction unit 132 prevent the incomplete printed matter created in the past from remaining. To prevent the incomplete printed matter created in the past from remaining, for example, it is necessary to delete the incomplete printed matter created in the past, overwrite a new incomplete printed matter on the incomplete printed matter created in the past, and the like.

The printed matter construction unit 132 constructs the complete printed matter by using the latest incomplete printed matter and the component information contained in the component-related information lastly received by the component-related information receiving unit 121. Note that the printed matter construction unit 132 typically constructs the printed matter of the complete product by arranging the latest incomplete printed matter and all pieces of the component information already received and not included in the incomplete printed matter depending on the layout information. Alternatively, the printed matter construction unit 132 may not construct a printed matter of a complete product. That is, the printed matter of the complete product may be constructed using another device.

"Before the component information is prepared" means a period of time during which the incomplete printed matter can be constructed on the basis of the existing component information, or one timing of such a period of time although it is difficult to construct a complete printed matter because a part of the component information is still missing. "Before the component information is prepared" may include, for example, "before the component-related information receiving unit 121 receives the last component information" or "before the component information accumulation unit 131 does not accumulate the last component information", and the like. However, any period of time or any timing may be set as long as the component-related information receiving unit 121 receives initial component information and then receives the last component information.

The printed matter construction unit 132 may determine whether or not the incomplete printed matter is constructed on the basis of an incomplete printed matter construction condition. The "incomplete printed matter construction condition" refers to a condition for executing a process of constructing the incomplete printed matter and information representing a trigger for executing the process of constructing the incomplete printed matter. Note that there is no limitation in the content of the incomplete printed matter construction condition.

The incomplete printed matter construction condition includes, for example, a condition that at least one piece of the component information included in the printed matter identified by the printed matter identifier as the component information corresponding to two or more component identifiers paired with the printed matter identifier contained in the printed matter construction information stored in the component information storage unit 112 is received by the component-related information receiving unit 121 or is stored in the component information storage unit 112 (this may be called a "first condition") . However, the first condition may be a condition that a predetermined number or more (for example, two or more, three or more, ...) pieces out of all the pieces of component information included in the printed matter identified by the printed matter identifier are received by the component-related information receiving unit 121 or are stored in the component information storage unit 112. The first condition may include any content without a limitation as long as it relates to the number of pieces of component information received by the component-related information receiving unit 121 or the number of pieces of component information stored in the component information storage unit 112 out of the component information included in the printed matter identified by the printed matter identifier.

In a case where the printed matter has a fixed region and a variable region, the incomplete printed matter construction condition may further include, in addition to the first condition, a second condition that the component information of the component-related information received by the component-related information receiving unit 121 has only the component information corresponding to the fixed region. The incomplete printed matter construction condition may have only the second condition.

In a case where the printed matter has a fixed region and a variable region, the incomplete printed matter construction condition may further include, in addition to the first condition, a third condition that two or more pieces of component information corresponding to one variable region exist in the component information contained in the component-related information received by the component-related information receiving unit 121. The incomplete printed matter construction condition may include only the third condition.

For example, in a case where the incomplete printed matter construction condition includes only the first condition, the printed matter construction unit 132 may determine that the incomplete printed matter construction condition is satisfied if at least one piece of the component information included in the printed matter identified by the printed matter identifier is stored in the component information storage unit 112. Otherwise, it may be determined that the incomplete printed matter construction condition is not satisfied if any one of pieces of the component information is not stored in the component information storage unit 112. This will be described in the first specific example.

For example, in a case where the incomplete printed matter construction condition includes the first and second conditions, the printed matter construction unit 132 may determine that the incomplete printed matter construction condition is satisfied if at least one piece of the component information included in the printed matter identified by the printed matter identifier is stored in the component information storage unit 112, and the component information contained in the component-related information received by the component-related information receiving unit 121 includes only the component information corresponding to the fixed region. Meanwhile, the printed matter construction unit 132 may determine that the incomplete printed matter construction condition is not satisfied if any one piece of the component information included in the printed matter identified by the printed matter identifier is not stored, if the component information contained in the component-related information received by the component-related information receiving unit 121 has only the component information corresponding to the variable region, or if the component information includes both the component information corresponding to the fixed region and the component information corresponding to the variable region. This will be described in a second specific example.

For example, in a case where the incomplete printed matter construction condition includes the first and third conditions, the printed matter construction unit 132 may determine that the incomplete printed matter construction condition is satisfied if at least one piece of the component information included in the printed matter identified by the printed matter identifier is stored in the component information storage unit 112, and two or more pieces of component information corresponding to a single variable region exist in the component information contained in the component-related information received by the component-related information receiving unit 121. Meanwhile, the printed matter construction unit 132 may determine that the incomplete printed matter construction condition is not satisfied if any one piece of the component information included in the printed matter identified by the printed matter identifier is not stored, or if any one piece of the component information corresponding to the variable region does not exist in the component information contained in the component-related information received by the component-related information receiving unit 121. This will be described in a third specific example.

In a case where the printed matter has two or more pages, the incomplete printed matter construction condition may include, in addition to the first condition, a fourth condition regarding the number of complete or incomplete pages. The incomplete page refers to a page not having the component information to be arranged on this page (when there is no page, or when one or two more pages are short) . The fourth condition is a condition that the incomplete printed matter is constructed using one or more pieces of component information stored in the component information storage unit 112, for example, in a case where there is only one incomplete page. Note that the incomplete printed matter construction condition may be only the fourth condition.

For example, in a case where the incomplete printed matter construction condition includes the first and fourth conditions, the printed matter construction unit 132 may determine that the incomplete printed matter construction condition is satisfied at the time point that the number of incomplete images reaches one page. In addition, the printed matter construction unit 132 may construct the incomplete printed matter using one or more pieces of component information stored in the component information storage unit 112 and the layout information 2 stored in the printed matter construction information storage unit 111. This will be described in the fourth specific example.

In a case where the printed matter construction information has an attribute value of the printed matter, the incomplete printed matter construction condition may include a fifth condition regarding the attribute value of the printed matter. The attribute value may include, for example, the number of pages. In a case where the attribute value has the number of pages, the fifth condition is a condition that the incomplete printed matter is constructed, for example, if a total page number of the printed matter is equal to or greater than a threshold value or if the total page number is greater than the threshold value. Note that the threshold value is set to, for example, "two", and the incomplete printed matter is constructed when the total page number is equal to or greater than "two".

For example, in a case where the incomplete printed matter construction condition includes the fifth condition, the printed matter construction unit 132 determines that the fifth condition is satisfied, and constructs the incomplete printed matter if the total page number of the printed matter is equal to or greater than the threshold value. Otherwise, if the total page number of the printed matter is smaller than the threshold value, the printed matter construction unit 132 determines that the fifth condition is not satisfied, and the process of constructing the incomplete printed matter may not be performed. This is will be described in a fifth specific example.

The incomplete printed matter construction condition may include any condition other than the condition regarding the printed matter described above. The incomplete printed matter construction condition may be instructed from other devices such as the terminal device 2. In addition, the incomplete printed matter construction condition may include, for example, a condition regarding the print server device. The condition regarding the print server device may include, for example, a condition that a load of the print server device is reduced as a predetermined condition is satisfied (for example, a CPU power is consumed only by a threshold value or smaller), or a condition that the number of users logging in the print server device is equal to or smaller than a threshold value. In addition, the incomplete printed matter construction condition may be a condition regarding time. The condition regarding time includes, for example, a condition that the current time is within a predetermined time zone, a condition that the current time reaches a predetermined timing, or a condition that the current date becomes close to a due date within a predetermined range as a delivery date of the printed matter. In addition, the incomplete printed matter construction condition may include, for example, a condition regarding user's manipulation. The condition regarding user's manipulation may include, for example, a condition that there is no manipulation during a threshold period of time after any manipulation is made by a user (terminal device 2), a condition that there is no predetermined manipulation during a threshold period of time after the predetermined manipulation is made by a user (terminal device 2).

The output unit 14 outputs the incomplete printed matter constructed by the printed matter construction unit 132. In addition, the output unit 14 also outputs the complete printed matter constructed by the printed matter construction unit 132. The output operation includes, for example, concepts of displaying on a display, accumulation in a recording medium, transmission to an external device (such as a server installed in a print factory), delivery of a processing result to other processing devices or other programs, and the like. Typically, the output unit 14 displays the incomplete printed matter or the complete printed matter on a display, accumulates it in a recording medium, or transmits it to an external device. However, for example, the output unit 14 may print it using a printer. There is no limitation in the form of the output operation.

The storage unit 11, the printed matter construction information storage unit 111, and the component information storage unit 112 may preferably include a nonvolatile recording medium such as a hard disk drive or a flash memory. However, they may also be implemented in a volatile recording medium. In addition, there is no limitation in a procedure of storing various types of information in the storage unit 11 and the like. For example, the information may be stored in the storage unit 11 or the like via a removable recording medium such as a CD-ROM or a memory card. Alternatively, the information transmitted via a network or a communication line may be stored in the storage unit 11 and the like. Alternatively, the information input via the input device such as a keyboard or a mouse may be stored in the storage unit 11 or the like.

The receiving unit 12 and the component-related information receiving unit 121 are typically implemented by a communication module such as a network card or the like, but may be implemented as a module for receiving broadcasting. That is, the receiving unit 12 and the component-related information receiving unit 121 may be implemented by wired or wireless communication means or broadcast receiving means.

Typically, the processing unit 13, the component information accumulation unit 131, and the printed matter construction unit 132 may be implemented using an MPU, a memory, and the like. Typically, a processing sequence of the processing unit 13 or the like is implemented using software, and the software is recorded in a recording medium such as a read-only memory (ROM). However, the processing sequence may also be implemented using hardware (such as a dedicated circuit).

The output unit 14 may include the output device such as a display or may not include it. The output unit 14 may be implemented by a driver software program of the output device, or a combination of the driver software program of the output device and the output device, or the like.

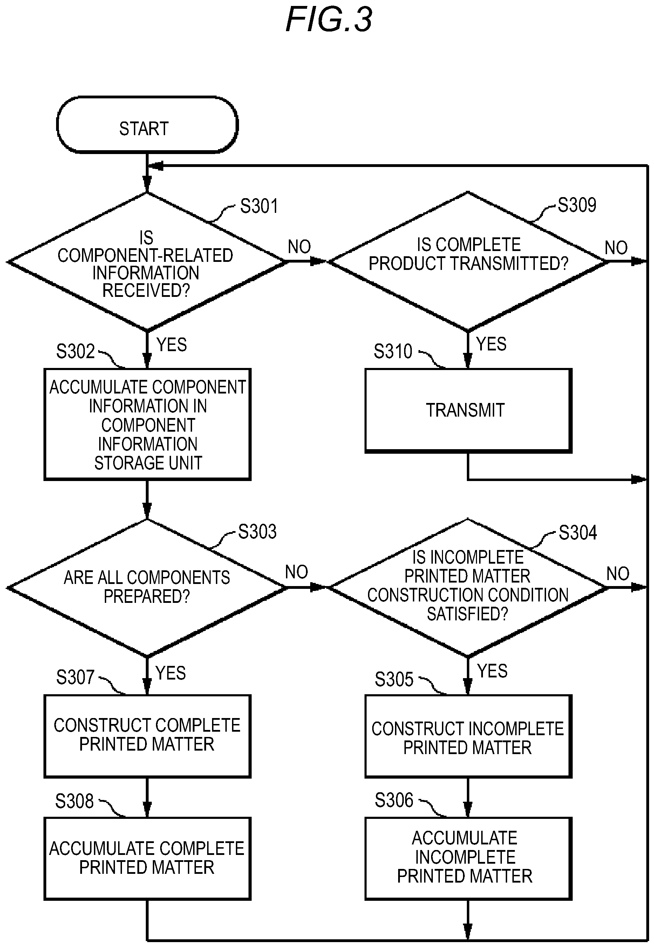

Next, operations of the print server device 1 will be described with reference to the flowchart of Fig. 3.

(Step S301) The processing unit 13 determines whether or not the component-related information receiving unit 121 receives the component-related information from the terminal device 2. If it is determined that the component-related information receiving unit 121 receives the component-related information from the terminal device 2, the process advances to step S302. Otherwise, the process advances to step S309.

(Step S302) The component information accumulation unit 131 accumulates the component information contained in the component-related information received by the component-related information receiving unit 121 in the component information storage unit 112 in association with the component identifier paired with the component information.

(Step S303) The printed matter construction unit 132 determines whether or not all pieces of the component information that are included in the printed matter identified by the printed matter identifier and correspond to two or more component identifiers paired with the printed matter identifier contained in the printed matter construction information stored in the printed matter construction information storage unit 111 are prepared. Specifically, the printed matter construction unit 132 determines that all pieces of component information are prepared if all pieces of component information corresponding to two or more component identifiers paired with the printed matter identifier contained in the printed matter construction information are stored in the component information storage unit 112. If any one of such pieces of component information is not stored, or if only a part of such pieces of component information is stored, the printed matter construction unit 132 determines that the component information is not prepared. If it is determined that all pieces of the component information are prepared, the process advances to step S307. Otherwise, the process advances to step S304.

(Step S304) The printed matter construction unit 132 determines whether or not the incomplete printed matter construction condition is satisfied. The incomplete printed matter construction condition will not be described repeatedly because it has been described above with reference to the block diagram and will be described in the following specific examples. If it is determined that the incomplete printed matter construction condition is satisfied, the process advances to step S305. Otherwise, the process returns to step S301.

(Step S305) The printed matter construction unit 132 constructs the incomplete printed matter using one or more pieces of component information stored in the component information storage unit 112 and included in the printed matter identified by the printed matter identifier. Preferably, the printed matter construction unit 132 constructs the incomplete printed matter using the incomplete printed matter constructed lastly and the component information received at least lastly. The printed matter construction unit 132 constructs the incomplete printed matter by arranging all pieces of component information already received and not included in such an incomplete printed matter, for example, in the lastly constructed incomplete printed matter depending on the layout information.

Note that, in a case where two or more pieces of component information corresponding to the variable region exist in the component information contained in the component-related information received by the component-related information receiving unit 121, the printed matter construction unit 132 may construct two or more pieces of incomplete printed matter for each of two or more pieces of component information by arranging each of two or more pieces of component information in the variable region.

(Step S306) The output unit 14 accumulates the incomplete printed matter constructed by the printed matter construction unit 132, for example, in the storage unit 11. However, the output unit 14 may output the incomplete printed matter via an output device such as a display. Then, the process returns to step S301.

(Step S307) The printed matter construction unit 132 constructs the complete printed matter using all pieces of component information stored in the component information storage unit 112 and included in the printed matter identified printed matter identifier. Preferably, the printed matter construction unit 132 constructs the complete printed matter using the incomplete printed matter lastly constructed and the component information at least lastly received.

(Step S308) The output unit 14 accumulates the complete printed matter constructed by the printed matter construction unit 132, for example, in the storage unit 11. However, the output unit 14 may output the complete printed matter, for example, via an output device such as a display. Then, the process returns to step S301.

(Step S309) The processing unit 13 determines whether or not the complete printed matter is transmitted. As a result, it is determined that the complete printed matter is transmitted as the complete printed matter is accumulated in the storage unit 11 or in response to a transmission request from the terminal device 2. However, there is no limitation in a trigger for transmitting the complete printed matter. If it is determined that the complete printed matter is transmitted, the process advances to step S310. Otherwise, the process returns to step S301.

(Step S310) The output unit 13 acquires the complete printed matter from the storage unit 11 and transmits it to the terminal device 2. Then, the process returns to step S301.

Note that the processing based on the flowchart of Fig. 3 starts in response to power-on or activation of a program and is terminated as the power is turned off or the program is terminated.

Note that the processing based on the flowchart of Fig. 3 is the process for a case where the printed matter construction information corresponding to one printed matter is stored in the printed matter construction information storage unit 111. However, in a case where the printed matter construction information corresponding to two or more printed matters is stored, two or more processings may be performed in parallel or in a time-division manner.

Specific operation examples of the print system according to this embodiment will now be described. Note that the following description is just for illustrative purposes, and various changes may be possible without limiting the scope of the invention.

Fig. 1 is a conceptual diagram illustrating the print system. The print server device 1 is operated, for example, by an operator of a company that operates the print system. The terminal device 2 is operated, for example, by a publisher that uses the print system or a user at home.

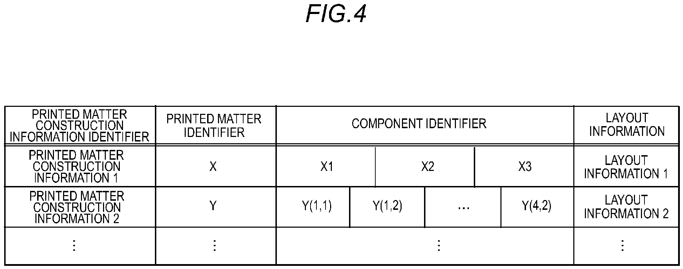

Fig. 2 is a block diagram illustrating the print server device 1. The printed matter construction information storage unit 111 stores information on one or more printed matters. The "information on one or more printed matters" includes, for example, printed matter construction information 1, printed matter construction information 2, ..., as illustrated in Fig. 4. The printed matter construction information 1 has a printed matter identifier "X" for identifying the printed matter X, component identifiers "X1", "X2", and "X3" for identifying three pieces of component information for constructing the printed matter X, and the layout information 1 described below. Note that the component identifier "Xi" means the (i)th component of the printed matter X (where "i" denotes a natural number).

The printed matter construction information 2 contains a printed matter identifier "Y" for identifying the printed matter Y, component identifiers "Y(1, 1)", "Y(1, 2)", "Y(2, 1)", ..., and "Y (4, 2)" for identifying eight pieces of component information for constructing the printed matter Y, and layout information 2 described below. Note that the component identifier "Y(j, i)" means the (i)th component of the (j)th page of the printed matter Y (where "j" and "I" denote any natural number). Note that the printed matter construction information 2 is information for constructing the printed matter including eight pieces of component information for four pages. However, such a setting is just for convenient description. Preferably, the printed matter construction information 2 includes a plurality of pages such as several hundreds, several thousands, several tens of thousands, and several hundreds of thousands and is information for constructing the printed matter having several hundreds or more pieces of component information (for example, several tens of millions).

The printed matter X is, for example, a leaflet for single-sided printing, and includes three pieces of component information paired with the component identifiers "X1", "X2", and "X3". The printed matter Y is, for example, a four-page pamphlet, and includes eight pieces of component information paired with the component identifiers "Y(1, 1)", "Y(1, 2)", ..., and "Y(4, 2). Specifically, the first page of the printed matter Y includes two pieces of component information paired with the component identifiers "Y(1, 1)" and "Y(1, 2)", ..., and the fourth page includes two pieces of component information paired with the component identifiers "Y(4, 1)" and "Y(4, 2)".

The printed matter construction information 1, the printed matter construction information 2, ... are also stored, for example, in the recording medium of the terminal device 2 (hereinafter, also referred to as a "terminal storage unit") . In addition, the terminal storage unit stores the component information paired with the component identifier "X1" (for example, a text file identified by the file identifier "AAA.txt"), the component information paired with the component identifier "X2" (for example, an image file identified by the file identifier "BBB. jpg"), and the component information paired with the component identifier "X3" (for example, a text file identified by the file identifier "CCC.txt").

The terminal storage unit stores the component information paired with the component identifier "Y(1, 1)" (for example, a text file identified by the file identifier "aaa.txt"), the component information paired with the component identifier "Y(1, 2)" (for example, an image file identified by the file identifier "bbb.jpg"), the component information paired with the component identifier "Y (2, 1)" (for example, a text file identified by the file identifier "ccc.txt"), ..., and the component information paired with the component identifier "Y(4, 2)" (for example, an image file identified by the file identifier "hhh.jpg").

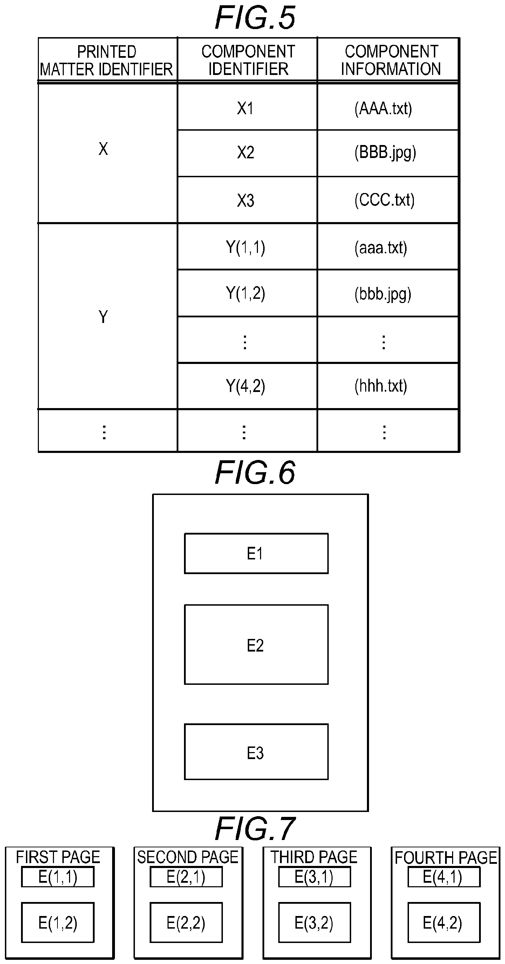

The component information storage unit 112 stores two or more component identifiers paired with the printed matter identifier included in one or more pieces of printed matter information stored in the printed matter construction information storage unit 111. One or more pieces of printed matter information stored in the printed matter construction information storage unit 111 includes the printed matter construction information 1, the printed matter construction information 2, ..., and so on. The two or more component identifiers paired with the printed matter identifier included in one or more pieces of printed matter information include, for example, as illustrated in Fig. 5, the component identifiers "X1", "X2", and "X3" paired with the printed matter identifier X, and the component identifiers "Y(1, 1)", "Y(1, 2)", ..., and "Y (4, 2)" paired with the printed matter identifier Y. While the component information storage unit 112 can store the component information paired with two or more component identifiers as described above, any piece of the component information has not been stored yet in the component information storage unit 112.

The printed matter X has three regions corresponding to the aforementioned component identifiers "X1", "X2", and "X3". Three regions include, for example, regions E1, E2, and E3 as illustrated in Fig. 6. In addition, the printed matter Y has eight regions corresponding to the component identifiers described above. The eight regions include, for example, regions E(1, 1), E(1, 2), ..., and E(4, 2) as illustrated in Fig. 7. Note that, although all of the illustrated regions are the rectangular region, any other shape such as a circular region may also be employed without a limitation.

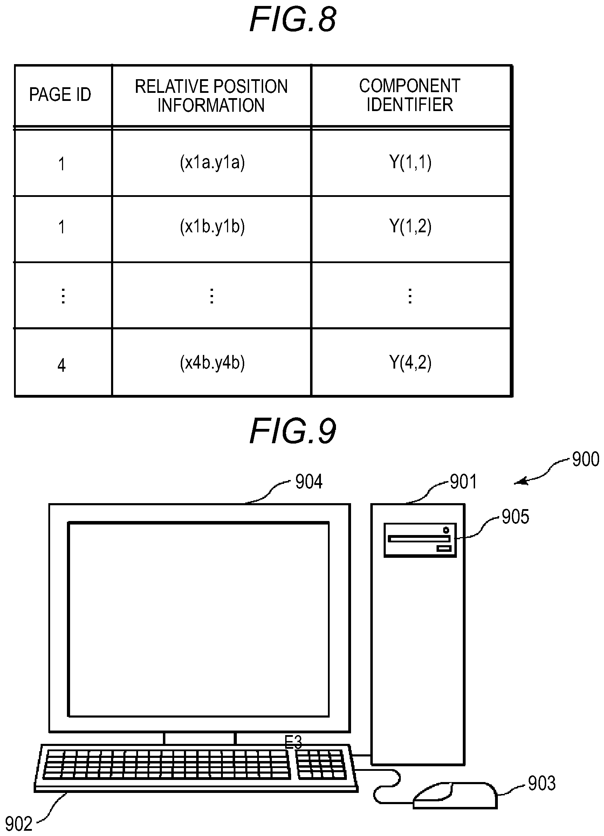

The layout information contained in the printed matter construction information includes, for example, two or more sets of a page ID, relative position information, and a component identifier as illustrated in Fig. 8. Note that the number of sets (number of sets) of the page ID, the relative position information, and the component identifier corresponds to the number of pieces of the component information included in the printed matter paired with the printed matter construction information. The word "correspond" typically means that the number of pieces of the component information is equal to the number of sets. However, they may also be different.

The page ID is an identifier for identifying a page. The page ID is, for example, a page number such as 1, 2, .... However, any other types of information may also be employed as long as the page can be identified. The relative position information is information representing a relative location of the component information in a page. The relative position information is expressed, for example, in a coordinate format (x, y) of the region where the component information is arranged. However, for example, in a case where the region has a rectangular shape, the relative position information may be expressed as a start point coordinate (upper left coordinate) and an end point coordinate (lower right coordinate) of that region. There is no limitation in the expression format of the relative position information.

Fig. 8 exemplarily illustrates the layout information 2 contained in the printed matter construction information 2 corresponding to the printed matter Y. Since the printed matter Y has eight pieces of component information, the layout information 2 has eight sets of the page ID, the relative position information, and the component identifier. The eight sets of the layout information 2 includes a set of the page ID "1", the relative position information "(xla, y1a)", and the component identifier "Y(1, 1)", a set of the page ID "1", the relative position information " (x1b, y1b)", and the component identifier "Y(1, 2)", a set of the page ID "2", the relative position information "(x2a, y2a)", and the component identifier "Y(2, 1)", ..., and a set of the page ID "4", the relative position information "(x4b, y4b)", and the component identifier "Y(4, 2)".

### (First Specific Example)

A first specific example relates to an operation example for constructing the printed matter X. The incomplete printed matter construction condition of the first specific example is a condition (first condition) that the incomplete printed matter is constructed using one or more pieces of component information stored in the component information storage unit 112 in a case where only one piece of component information is not stored out of all of the pieces of component information included in the printed matter.

The terminal device 2 transmits the component-related information 1 having the component identifier "X1" and the component information "AAA.txt", the component-related information 2 having the component identifier "X2" and the component information "BBB.jpg", and the component-related information 3 having the component identifier "X3" and the component information "CCC.txt" to the print server device 1 at different timings. For example, it is assumed that the component-related information 1 is transmitted in the morning of a certain day, the component-related information 3 is transmitted subsequently, and the component-related information 2 is transmitted in the afternoon of that day.

As the component-related information 1 is transmitted from the terminal device 2, the component-related information receiving unit 121 of the print server device 1 receives the component-related information 1. The component information accumulation unit 131 accumulates the component information "AAA.txt" contained in the component-related information 1 in the component information storage unit 112 in association with the component identifier "X1". Since the component information corresponding to the component identifier "X2" and the component information corresponding to the component identifier "X3" have not been stored yet in the component information storage unit 112, the printed matter construction unit 132 determines that the component information is not prepared, and further determines whether or not the incomplete printed matter construction condition is satisfied. Note that there is no limitation in how the printed matter construction unit 132 determines whether or not the component information is prepared. The printed matter construction unit 132 may determine that the component information is prepared if all of the pieces of component information defined in the layout information of one printed matter exist in the component information storage unit 11 by referencing the layout information of the storage unit 11. In addition, the printed matter construction unit 132 may determine that the component information is prepared if all of the pieces of component information defined in the order data including information for constructing the printed matter exist in the component information storage unit 11 by referencing the order data received from an external device (for example, terminal device 2). The printed matter construction unit 132 may also determine whether or not the component information is prepared by referencing information other that the component information such as the layout information or the order data.

At this time point, since two pieces of the component information have not been stored, the printed matter construction unit 132 determines that the incomplete printed matter construction condition is not satisfied, and does not construct the incomplete printed matter.

Subsequently, as the component-related information 3 is transmitted from the terminal device 2, the component-related information receiving unit 121 of the print server device 1 receives the component-related information 3, and the component information accumulation unit 131 accumulates the component information "CCC.txt" contained in the component-related information 3 in the component information storage unit 112 in association with the component identifier "X3". Since the component information corresponding to the component identifier "X2" has not been stored yet in the component information storage unit 112, the printed matter construction unit 132 determines that the component information is not prepared, and further determines whether or not the incomplete printed matter construction condition is satisfied.

At this time point, since only one piece of the component information is not stored, the printed matter construction unit 132 determines that the incomplete printed matter construction condition is satisfied, and constructs the incomplete printed matter using two pieces of component information "AAA. txt" and "CCC.txt" stored in the component information storage unit 112 and the layout information 1 stored in the printed matter construction information storage unit 111. Specifically, the printed matter construction unit 132 constructs the incomplete printed matter by arranging a text based on the component information "AAA.txt" (for example, a title "first new-year sunrise rising from the OO mountain") in the region E1 and further arranging a text based on the component information "CCC.txt" (for example, a sentence "a photograph taken at the band of the OO lake ...") in the region E3 for the page having regions E1 to E3 of Fig. 6 and accumulates the incomplete printed matter in the storage unit 11.

The output unit 14 outputs the incomplete printed matter stored in the storage unit 11 via an output device such as a display. As a result, for example, a print image of the incomplete printed matter is displayed on the display. An operator of the print server device 1 can check the incomplete printed matter while watching the print image on the display.

In this manner, at the time point that only one piece of non-stored component information is left (or non-received, this will similarly apply in the following description), the incomplete printed matter is constructed and output using one or more pieces of the stored component information. As a result, it is possible to allow an operator to start the check work before the printed matter is completed.

Then, as the component-related information 2 is transmitted from the terminal device 2, the component-related information receiving unit 121 of the print server device 1 receives the component-related information 2, and the component information accumulation unit 131 accumulates the component information "BBB.jpg" contained in the component-related information 2 in the component information storage unit 112 in association with the component identifier "X2". Since the component information "AAA.txt" corresponding to the component identifier "X1", the component information "BBB.jpg" corresponding to the component identifier "X2", and the component information "CCC.txt" corresponding to the component identifier "X3" are stored in the component information storage unit 112, the printed matter construction unit 132 determines that all pieces of component information are prepared, and constructs the complete printed matter using the incomplete printed matter stored in the storage unit 11 and the component information "BBB.jpg" lastly received by the component-related information receiving unit 121. Specifically, the printed matter construction unit 132 constructs the complete printed matter by arranging an image based on the component information "BBB.jpg" corresponding to the component identifier "X2" in the region E2 of the incomplete printed matter, and accumulates the complete printed matter in the storage unit 11.

In this manner, the time for constructing the printed matter of the complete product after all components for completing the printed matter are prepared can be reduced by using the incomplete printed matter constructed at the time point that only one piece of non-stored component information is left, and one piece of the lastly received component information.

In general, the incomplete printed matter construction condition may be a condition that the incomplete printed matter is constructed using one or more pieces of component information stored in the component information storage unit 112 in a case where the number of pieces of non-stored component information is equal to or smaller than "i" (where "i" denotes a natural number smaller than a total number of the component information included in the printed matter X. In this example, since the total number is set to "3", "i" is set to "i = 1 or 2"). In this case, the printed matter construction unit 132 constructs the incomplete printed matter (first draft) using one or more pieces of the stored component information at the time point that the number of pieces of the non-stored component information becomes "i", and the output unit 14 outputs the incomplete printed matter. Therefore, an operator can start a check work before the printed matter is completed.

Then, for a period of time until the number of pieces of the non-stored component information becomes smaller than the total number of the component information included in the printed matter X by "1" (in this example, "3 - 1 = 2"), the printed matter construction unit 132 constructs a new incomplete printed matter (second draft) using the lastly constructed incomplete printed matter (in this example, first draft) and the lastly received component information (in this example, second component information) whenever the component-related information receiving unit 121 receives new component-related information. In addition, the output unit 14 outputs the new incomplete printed matter. As a result, an operator can advance the check work in response to receiving the component information.

When the last (in this example, the third) component information is received, the printed matter construction unit 132 constructs the complete printed matter using the lastly constructed incomplete printed matter (latest draft: in this example, second draft) and the last component information, and the output unit 14 outputs the complete printed matter. Even in this case, it is possible to shorten the time for constructing a printed matter of a complete product after all components for completing the printed matter are prepared.

Note that the threshold value "i" of the incomplete printed matter construction condition described above may be variable. In this case, for example, the processing unit 13 may receive a numerical input from an operator via an input device such as a keyboard, and the printed matter construction unit 132 may construct the incomplete printed matter by setting this input value as the threshold value "i" of the incomplete printed matter construction condition. As a result, since the timing for starting the check work changes depending on the threshold value "i", an operator can start the check work earlier, for example, by increasing the threshold value "i". Note that the processing unit 13 may determine the threshold value "i" depending on the attribute value of the printed matter (such as the number of pages or the number of copies). The processing unit 13 may determine the threshold value "i, " for example, depending on an incrementing function based on the attribute value of the printed matter as a parameter.

Alternatively, for example, in a case where the number of pieces of the received component information is equal to or greater than "j" (where "j" denotes a natural number smaller than a total number of pieces of component information included in the printed matter X. In this example, "j" is set to "j = 1 or 2"), the incomplete printed matter construction condition may be a condition that the incomplete printed matter is constructed using one or more pieces of component information stored in the component information storage unit 112. In this case, when the (j)th component information is received, the printed matter construction unit 132 constructs the incomplete printed matter (first draft) using this component information, and the output unit 14 outputs the incomplete printed matter. Therefore, an operator can start the check work before the printed matter is completed.

When the {j+1}th component information is received, the printed matter construction unit 132 constructs a new incomplete printed matter (second draft) using the incomplete printed matter (first draft) constructed in advance, and the {j+1}th component information. In addition, the output unit 14 outputs the new incomplete printed matter.

Then, for a period of time until the number of pieces of the received component information becomes smaller than the total number of the component information included in the printed matter X by "1" (in this example, "3 - 1 = 2"), the printed matter construction unit 132 constructs a new incomplete printed matter (second draft) using the lastly constructed incomplete printed matter (in this example, first draft) and the lastly received component information (in this example, second component information) whenever the component-related information receiving unit 121 receives new component-related information. In addition, the output unit 14 outputs the new incomplete printed matter. As a result, an operator can advance the check work in response to receiving the component information.

When the last (in this example, third) component information is received, the printed matter construction unit 132 constructs a new complete printed matter using the lastly constructed incomplete printed matter (in this example, second draft) and the last component information. In addition, the output unit 14 outputs the new incomplete printed matter. Even in this case, it is possible to shorten the time for constructing the complete product after all pieces of component information are prepared.

### (Second Specific Example)

The second specific example relates to an operation example different from a case where the printed matter X is constructed. Note that operations similar to those of the aforementioned specific examples will be omitted or simplified for simplicity purposes (this will similarly apply in the following description).

In this example, the printed matter has a fixed region and a variable region. In this example, the incomplete printed matter construction condition further includes, in addition to the first condition of the first specific example, a condition (second condition) that the component information contained in the component-related information received by the component-related information receiving unit 121 is only the component information corresponding to the fixed region.

For example, it is assumed that the regions E1 and E2 of the printed matter X of Fig. 6 are the fixed regions, and the region E3 is the variable region. In addition, as the component information 3 corresponding to the region E3 as a variable region, for example, there are two or more types of component information 3a, 3b, ... such as a general sentence and a sentence for children.

Assuming that the component-related information 1 and the component-related information 3a are sequentially transmitted from the terminal device 2, the printed matter construction unit 132 determines that the first condition is satisfied at the time point that the print server device 1 receives the component-related information 1 and then receives the component-related information 3a. However, since the latter component-related information 3 corresponds to the variable region, the printed matter construction unit 132 determines that the second condition is not satisfied, so that the process for constructing the incomplete printed matter is not performed.

In comparison, assuming that the component-related information 1 and the component-related information 2 are sequentially transmitted from the terminal device 2, the printed matter construction unit 132 determines that the first condition is satisfied at the time point that the print server device 1 receives the component-related information 1 and then receives the component-related information 2. In addition, since any one piece of the received component information also corresponds to the fixed region, the printed matter construction unit 132 determines that the second condition is satisfied and constructs the incomplete printed matter.

If the component information included in the received component-related information includes the component information corresponding to the variable region, another piece of component information corresponding to this variable region is transmitted thereafter, and reconstruction of the incomplete printed matter may be necessary. However, in this example, it is possible to construct the incomplete printed matter only when the component information contained in the component-related information is the component information corresponding to the fixed region.

### (Third Specific Example)

The third specific example relates an operation example other than a case where the printed matter X is constructed. Similarly, in this example, the printed matter has the fixed region and the variable region. In addition, in the printed matter X of Fig. 6, the regions E1 and E2 are the fixed regions, and the region E3 is the variable region. In addition, as the component information 3 corresponding to the region E3 as the variable region, for example, there are two or more types of component information 3a, 3b, ... such as a general sentence and a sentence for children.

In this example, the incomplete printed matter construction condition further includes, in addition to the first condition of the first specific example, a condition (third condition) that two or more pieces of component information corresponding to the variable region exist in the component information contained in the component-related information received by the component-related information receiving unit 121.

Assuming that the component-related information 1 and the component-related information 3a are sequentially transmitted from the terminal device 2, the printed matter construction unit 132 determines that the first condition is satisfied at the time point that the print server device 1 receives the component-related information 1 and further receives the component-related information 3a. However, only the component-related information 3a corresponds to the variable region out of the component information contained in the component-related information received by the component-related information receiving unit 121. Therefore, it is determined that the third condition is not satisfied, and the process for constructing the incomplete printed matter is not performed.

Then, assuming that the component-related information 3b is transmitted from the terminal device 2, the printed matter construction unit 132 determines that the first condition is satisfied and the second condition is also satisfied at the time point that the print server device 1 receives the component-related information 3b. In addition, the printed matter construction unit 132 constructs an incomplete printed matter (general version) in which texts based on the component information 3a are arranged in the region E3 as a variable region and an incomplete printed matter (children version) in which texts based on the component information 3b are arranged in the region E3, and the output unit 14 outputs images of two types of the incomplete printed matter constructed by the printed matter construction unit 132. In this manner, two or more types of the incomplete printed matters are constructed by arranging different pieces of component information in the variable region and are output. As a result, an operator can perform a correction work for each of two or more types of incomplete printed matters.

### (Fourth Specific Example)

The fourth specific example relates to an operation example for constructing the printed matter Y. In this example, the incomplete printed matter construction condition is a condition (fourth condition) that, in a case where only one page is incomplete (in general, equal to or smaller than "k" pages, where "k" denotes any natural number smaller than the total page number of the printed matter Y. In this example, since the total page number is set to "4", "i" is set to "i = 1, 2, or 3"), the incomplete printed matter is constructed using one or more pieces of component information stored in the component information storage unit 112.

The terminal device 2 transmits the component-related information (1, 1) having the component identifier "Y(1, 1)" and the component information "aaa.txt", the component-related information (1, 2) having the component identifier "Y(1, 2)" and the component information "bbb.jpg", the component-related information (2, 1) having the component identifier "Y(2, 1)" and the component information "ccc.txt", ..., and the component-related information (4, 2) having the component identifier "Y(4, 2)" ad the component information "hhh.jpg" at different timings. For example, it is assumed that the terminal device 2 sequentially transmits six pieces of component-related information (1, 1) to (3, 2) in the morning of a certain day and transmits two pieces of component-related information (4, 1) and (4, 2) in the afternoon of that day.

As the component-related information (1, 1) is transmitted from the terminal device 2, the component-related information receiving unit 121 of the print server device 1 receives the component-related information (1, 1), and the component information accumulation unit 131 accumulates the component information "aaa.txt" included in the component-related information 1 in the component information storage unit 112 in association with the component identifier "Y(1, 1)". Since seven pieces of component information corresponding to the component identifiers "Y(1, 2) to Y(4, 2)" have not been stored yet in the component information storage unit 112, the printed matter construction unit 132 determines that the component information is not prepared and further determines whether or not the incomplete printed matter construction condition is satisfied.

At this time point, since the number of incomplete pages is "eight pages", the printed matter construction unit 132 determines that the incomplete printed matter construction condition is not satisfied, and the process of constructing the incomplete printed matter is not performed.

Then, as the terminal device 2 sequentially transmits six pieces of component-related information (1, 2) to (3, 2), the component-related information receiving unit 121 of the print server device 1 sequentially receives the component-related information (1, 2) to (3, 2), and the component information accumulation unit 131 sequentially accumulates the component information "bbb.jpg" to "fff.jpg" included in the component-related information (1, 2) to (3, 2) in the component information storage unit 112 in association with the component identifiers Y(1, 2) to Y(4, 2).

Since the number of incomplete pages is only one at the time point that the component information "fff.jpg" included in the sixth component-related information (3, 2) is accumulated in the component information storage unit 112 in association with the component identifier "Y(3, 2)", the printed matter construction unit 132 determines that the incomplete printed matter construction condition is satisfied, and constructs the incomplete printed matter using seven pieces of component information "aaa.txt" to "fff.jpg" stored in the component information storage unit 112 and the layout information 2 stored in the printed matter construction information storage unit 111.

Specifically, the printed matter construction unit 132 constructs a first complete page by arranging texts based on the component information "aaa.txt" in the region E(1, 1) corresponding to the relative position information (x1a, y1a) and arranging images based on the component information "bbb.jpg" in the region E(1, 2) corresponding to the relative position information (x1b, y1b) for the first page having two regions E(1, 1) and E(1, 2) of Fig. 7. The printed matter construction unit 132 also constructs a second complete page and a third complete page in a similar sequence.

The printed matter construction unit 132 accumulates the first to third pages completed in this manner and the incomplete printed matter (first draft) having a fourth incomplete page in the storage unit 11. The output unit 14 outputs the incomplete printed matter stored in the storage unit 11 via an output device such as a display. As a result, for example, a print image of the incomplete printed matter is displayed on the display. In this case, the output unit 14 may output, for example, all the pages included in the incomplete printed matter stored in the storage unit 11 or may output only the complete page without outputting the incomplete page. Alternatively, out of the complete pages and incomplete pages, the output unit 14 may output the page having one or more pieces of component information and may not output the page having any one of pieces of the component information. An operator can correct the incomplete printed matter while watching the print image on the display. The processing unit 13 receives an operation for correction via the input device and performs a process for constructing the incomplete printed matter stored in the storage unit 11.

In this manner, at the time point that only one page is left as the incomplete page, the incomplete printed matter is constructed using one or more pieces of the stored component information and is output. As a result, an operator can start a check work before the printed matter is completed.

Then, as the seventh component-related information (4, 1) is transmitted from the terminal device 2, the print server device 1 receives this component-related information (4, 1), and the component information "ggg.txt" included therein is accumulated in the component information storage unit 112 in association with the component identifier "Y(4, 1)". Since only one incomplete page is left, the printed matter construction unit 132 constructs a new incomplete printed matter (second draft) by arranging the component information "ggg.txt" in the region E(4, 1) of the fourth page included in the incomplete printed matter (first draft) stored in the storage unit 11 and outputs it. As a result, an operator can advance a correction work in response to receiving the component information.

Then, as the last component-related information (4, 2) is transmitted from the terminal device 2, the print server device 1 receives this component-related information (4, 2), and the component information "hhh.jpg" included therein is accumulated in the component information storage unit 112 in association with the component identifier "Y(4, 2)". Since all of eight pieces of component information for constructing the printed matter Y are prepared, the printed matter construction unit 132 constructs the complete printed matter by arranging the component information "hhh.jpg" in the region E(4, 2) of the fourth page included in the latest incomplete printed matter (second draft) stored in the storage unit 11 and outputs it.

In this manner, the time for constructing the printed matter of the complete product after all components for completing the printed matter are prepared can be reduced by constructing the complete printed matter using the lastly constructed incomplete printed matter and lastly received one piece of component information.

Note that the incomplete printed matter construction condition may be a condition that the incomplete printed matter is constructed using one or more pieces of component information stored in the component information storage unit 112 in a case where the number of incomplete pages is equal to or smaller than "k" pages (where "k" denotes any natural number smaller than the total page number of the printed matter Y. In this example, since the total page number is set to "4", "k" is set to "k = 1, 2, or 3"). In addition, the threshold value k of this incomplete printed matter construction condition may be variable.

Alternatively, the incomplete printed matter construction condition may be a condition that the incomplete printed matter is constructed using one or more pieces of component information stored in the component information storage unit 112, for example, in a case where the number of complete pages is equal to or greater than "m" pages (where "m" denotes any natural number smaller than the total page number of the printed matter Y. In this example, "m" is set to "m = 1, 2, or 3").

Alternatively, the incomplete printed matter may be constructed using the incomplete printed matter construction condition as in the first specific example regardless of two or more pages even when the printed matter has two or more pages as in the printed matter Y.

### (Fifth Specific Example)

The fifth specific example relates to another operation example for constructing the printed matter Y. In this example, the printed matter construction information has an attribute value of the printed matter. The attribute value may include, for example, the number of pages. In this example, the incomplete printed matter construction condition includes a condition (fifth condition) regarding the attribute value of the printed matter. The fifth condition is a condition that the incomplete printed matter is constructed, for example, in a case where the total page number of the printed matter is equal to or greater than a threshold value (in this example, two pages) .

For example, in Fig. 4, the printed matter construction information 2 has an attribute value of "4" regarding the number of pages of the printed matter Y. In addition, the printed matter construction information 3 has an attribute value of "1" regarding the number of pages of the printed matter X. The printed matter construction unit 132 determines that the fifth condition is satisfied and constructs the incomplete printed matter because the total page number of the printed matter Y is "four", which is equal to or greater than the threshold value. In comparison, the printed matter construction unit 132 determines that the fifth condition is not satisfied and does not perform the process of constructing the incomplete printed matter because the total page number of the printed matter X is "one" page, which is smaller than the threshold value.

Note that the attribute value of the printed matter construction information may be, for example, the number of copies. In this case, the fifth condition is a condition that the incomplete printed matter is constructed in a case where the number of published copies of the printed matter is equal to or greater than a threshold value (in this example, "100") . For example, the printed matter construction information 2 has an attribute value of "50" regarding the number of copies of the printed matter Y, and the printed matter construction information 3 has an attribute value "200" regarding the number of copies of the printed matter Z. In a case where the printed matter Y satisfies the fourth condition, the printed matter construction unit 132 determines that the fifth condition is also satisfied and constructs the incomplete printed matter. In comparison, in a case where the printed matter Z satisfies the fourth condition, the printed matter construction unit 132 determines that the fifth condition is not satisfied, and may not perform the process of constructing the incomplete printed matter.

The attribute value of the printed matter construction information may include, for example, the type of the printed matter (for example, leaflet, pamphlet, book, and the like). In this case, while the printed matter construction unit 132 constructs the incomplete printed matter, for example, for a certain type of the printed matters (for example, book), the printed matter construction unit 132 may not perform the process of constructing the incomplete printed matter for other types of printed matters (for example, leaflet or pamphlet) . In addition, the printed matter construction unit 132 constructs the incomplete printed matter regardless of the number of copies for a certain type of the printed matter. However, the printed matter construction unit 132 constructs the incomplete printed matter in a case where the number of copies is equal to or greater than a threshold value for the types of printed matters (for example, leaflet or pamphlet) . In addition, the printed matter construction unit 132 does not perform the process of constructing the incomplete printed matter in a case where the number of copies is equal to or smaller than the threshold value.

The attribute value of the printed matter construction information may include, for example, a delivery destination of the printed matter managed in advance (stored in the storage unit 11 or the like). In this case, the printed matter construction unit 132 constructs the incomplete printed matter for a certain delivery destination (for example, a delivery destination of a member who has registered). However, the printed matter construction unit 132 may not perform the process of constructing the incomplete printed matter for other delivery destination (for example, a delivery destination of a member who has not registered).

In this manner, it is possible to construct and output the incomplete printed matter by limiting to a printed matter having a certain attribute value of the printed matter construction information.

### (Other Specific Examples)

Note that the incomplete printed matter construction condition may include, for example, only the first condition described above. In this case, the incomplete printed matter construction process is executed, for example, whenever the component information is received.

The incomplete printed matter construction condition may be a condition that the incomplete printed matter is constructed, for example, when a certain percentage or higher or higher than the certain percentage of two or more pieces of component information necessary to construct a complete publication are prepared. A certain percentage may be a percentage of the number of pieces of the prepared component information against the number of pieces of necessary component information, or a percentage of an information amount of the component information against an information amount of the necessary component information without limiting to a calculation method thereof. In addition, the certain percentage may be set to, for example, 90%, 80%, a half, or the like without a limitation.

According to this embodiment described above, the print server device includes a printed matter construction information storage unit 111 that stores the printed matter construction information containing the printed matter identifier for identifying one printed matter and two or more component identifiers for identifying the component information for constructing the printed matter identified by the printed matter identifier, a component information storage unit 112 that stores two or more pieces of component information in association with the printed matter identifier, the component-related information receiving unit 121 that receives two or more pieces of component-related information having the component identifier and the component information identified by the component identifier at different timings, the component information accumulation unit 131 that accumulates the component information contained in the component-related information received by the component-related information receiving unit 121 in the component information storage unit 112 in association with the component identifier paired with the component information, and the printed matter construction unit 132 that constructs the incomplete printed matter using one or more pieces of component information stored in the component information storage unit 112 and identified by the printed matter identifier before all pieces of the component information included in the printed matter identified by the printed matter identifier contained in the printed matter construction information as component information corresponding to two or more component identifiers paired with the printed matter identifier contained in the printed matter construction information are prepared. The printed matter construction unit 132 may construct the incomplete printed matter using one or more pieces of the prepared component information before all of two or more pieces of component information included in one printed matter are prepared by the print server device 1 that constructs the complete printed matter using the lastly constructed incomplete printed matter and the component information contained in the component-related information lastly received by the component-related information receiving unit 121. For this reason, it is possible to shorten the time for constructing the printed matter of the complete product after all pieces of component information are prepared.

In the print server device 1 described above, the printed matter construction unit 132 may construct the incomplete printed matter in response to receiving the component-related information by constructing the incomplete printed matter using one or more pieces of component information including the component information of the component-related information as the component-related information receiving unit 121 receives the component-related information. In addition, a new incomplete printed matter may be constructed to be closer to the complete printed matter whenever the component-related information is received.

In the print server device 1, the printed matter construction unit 132 can effectively construct the complete printed matter by constructing the complete printed matter using the lastly constructed incomplete printed matter and the component information contained in the component-related information lastly received by the component-related information receiving unit 121.

In the print server device 1 described above, the printed matter has the fixed region and the variable region. In a case where the component information contained in the component-related information received by the component-related information receiving unit 121 has only the component information corresponding to the fixed region, the printed matter construction unit 132 constructs the incomplete printed matter using one or more pieces of component information identified by the printed matter identifier and stored in the component information storage unit 112 before all pieces of component information included in the printed matter identified by the printed matter identifier contained in the printed matter construction information are prepared. Therefore, the incomplete printed matter can be constructed only when the component information included in the received component-related information has only the component information corresponding to the fixed region.

In the print server device 1 described above, the printed matter has the fixed region and the variable region. The printed matter construction unit 132 constructs two or more incomplete printed matters for each of two or more pieces of component information by arranging each of two or more pieces of component information in the variable region in a case where there are two or more pieces of component information corresponding to a single variable region out of the component information contained in the component-related information received by the component-related information receiving unit 121. Therefore, it is possible to construct two or more types of incomplete printed matters by arranging different pieces of component information in the variable region.

In the print server device 1 described above, the printed matter construction unit 132 may construct the incomplete printed matter or may not construct the incomplete printed matter depending on the printed matter. Therefore, it is possible to construct an incomplete printed matter only for a specific printed matter.

In the print server device 1, the printed matter construction information has an attribute value of the printed matter. The printed matter construction unit 132 may construct the incomplete printed matter or may not construct the incomplete printed matter depending on the attribute value of the printed matter. Therefore, it is possible to construct an incomplete printed matter only for the printed matter having a certain attribute value in the printed matter construction information.

The processing according to this embodiment may be implemented with software. In addition, this software may be distributed by downloading. Furthermore, this software may be distributed by recoding it on a recording medium such as CD-ROM. Note that this also applies to other embodiments herein. Note that software that implements the information processing device according to this embodiment is, for example, a program for causing a computer to function as each unit described above, such as the following program. Specifically, for this program, a recording medium accessible by a computer contains the printed matter construction information storage unit 111 that stores the printed matter construction information including the printed matter identifier for identifying one printed matter and two or more component identifiers for identifying the component information for constructing the printed matter identified the printed matter identifier, and the component information storage unit 112 that stores two or more pieces of component information in association with the printed matter identifier. This program causes a computer to function as the component-related information receiving unit 121 that receives the component identifier and two or more pieces of component-related information having the component information identified by the component identifier at different timings, the component information accumulation unit 131 that accumulates the component information contained in the component-related information received by the component-related information receiving unit 121 in the component information storage unit 112 in association with the component identifier paired with the component information, and the printed matter construction unit 132 that constructs the incomplete printed matter using one or more pieces of component information identified by the printed matter identifier and stored in the component information storage unit 112 before all pieces of the component information included in the printed matter identified by the printed matter identifier contained in the printed matter construction information as component information corresponding to two or more component identifiers paired with the printed matter identifier contained in the printed matter construction information are prepared.

Fig. 9 is a diagram illustrating an exemplary appearance of a server 900 that implements the print server device 1 by executing the aforementioned program. The aforementioned embodiment may be implemented with computer hardware and a computer program executed thereon. In Fig. 9, the server 900 has a computer 901 including a CD-ROM drive 905, a keyboard 902, a mouse 903, and a display 904. Note that the entire system having the keyboard 902, the mouse 903, or the display 904 may be called a computer.

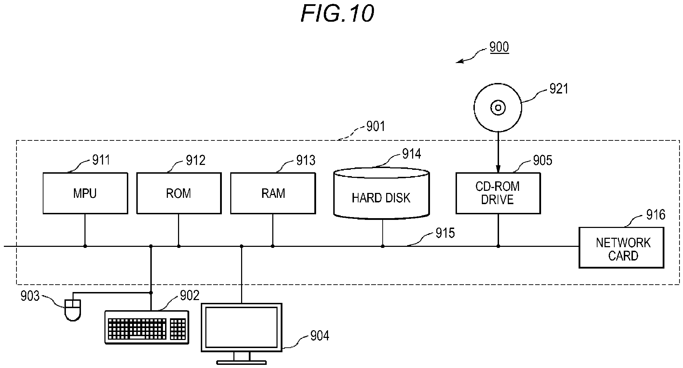

Fig. 10 is a diagram illustrating an internal configuration of the server 900. In Fig. 10, the computer 901 includes, in addition to the CD-ROM drive 905, an MPU 911, a ROM 912 for storing programs such as a boot-up program, a RAM 913 connected to the MPU 911 to temporarily store a command of the application program and provide a temporary memory space, a hard disk 914 that stores the application programs, system programs, and data, a bus 915 that connects the MPU 911, the ROM 912, and the like to each other, and a network card 916 that provides connection to a network such as the Internet.

The program that causes the server 900 to execute functions of the print server device 1 may be stored in the CD-ROM 921, may be inserted into the CD-ROM drive 905, or may be transmitted to the hard disk 914. Alternatively, the program may be transmitted to the computer 901 via a network such as the Internet and may be stored in the hard disk 914. The program is loaded on the RAM 913 at the time of execution. Note that the program may be directly downloaded from the CD-ROM 921 or the network. Furthermore, instead of the CD-ROM 921, the program may be read by the server 900 via another detachable recording medium (such as a DVD or a memory card).

The program may not necessarily include an operation system (OS) or a third party program that causes the computer 901 to execute functions of the print server device 1. The program may call a function or module suitable for a control aspect and only contains a part of commands for obtaining a desired result. How to operate the server 900 is well known in the art, and will not be descried herein.

Note that the aforementioned program does not include a processing performed by hardware, such as a process executed using a network card or the like in the transmission step (the process executed only by hardware) in a transmission step for transmitting information or a receiving step for receiving information, or the like.

The program described above may be executed by a single computer or a plurality of computers. That is, either a concentrated processing or a distributed process may also be performed.

In the embodiment described above, each processing (each function) may be implemented by a concentrated processing using a single device (system) or may be implemented by a distributed processing using a plurality of devices.

Although there is no particular description for rendering in the first embodiment, the printed matter construction unit 132 may perform the rendering for each printed matter or for each page using two or more pieces of component information after all of two or more pieces of component information included in one printed matter are prepared. Alternatively, a rendering unit (not shown) preferably performs rendering for each component before all pieces of component information are prepared.

The rendering may be, for example, a process of visualizing information or a process of transforming component information into a component image as an image of the component. More specifically, the rendering may be, for example, a process of transforming vector format data suitable for processings such as handling or editing into a bitmap format suitable for an output device such as a printer or a display that performs a raster output operation. In addition, the rendering may include a process of transforming a certain type (such as JPEG) of bitmap data into other types (such as GIF) of bitmap data. Furthermore, the rendering may also include a process of changing image quality (such as the number of pixels, color, and brightness) of the bitmap data.

In the second embodiment, a print server device that performs rendering for each component before all pieces of component information are prepared will be described. Note that like elements that perform operations similar to those of the first embodiment will be denoted by like reference numerals, and they will not be described repeatedly. In addition, elements that perform partially different operations from those of the first embodiment will be denoted by like reference numerals added with subscripts, and only differences will be described. Furthermore, factors common to those of the first embodiment will not be described repeatedly.

### (Second Embodiment)

A conceptual diagram of the print system according to the second embodiment is similar to that of Fig. 1. However, unlike Fig. 1, the print server device 1 is substituted with a print server device 1a. This print system has a print server device 1a and one or two or more terminal devices 2. The print server device 1a is different from the print server device 1 described above in that rendering is performed for each component before all of two or more pieces of component information included in one printed matter are prepared.

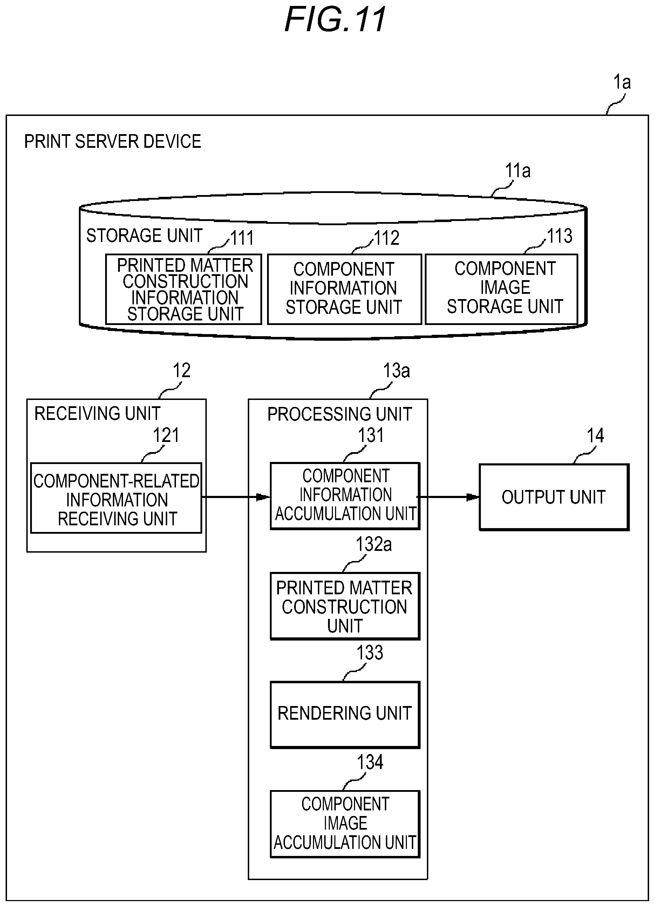

Fig. 11 is a block diagram illustrating the print server device 1a. The print server device 1a has a storage unit 11a, a receiving unit 12, a processing unit 13a, and an output unit 14. The storage unit 11a has a printed matter construction information storage unit 111, a component information storage unit 112, and a component image storage unit 113. The receiving unit 12 has a component-related information receiving unit 121. The processing unit 13a has a component information accumulation unit 131, a printed matter construction unit 132a, a rendering unit 133, and a component image accumulation unit 134.

The storage unit 11a of the print server device 1a can store various types of information. Various types of information may include, for example, the aforementioned printed matter construction information, the aforementioned component information, a component image described above, and the like.

Note that, specifically, the component information may include, for example, vector data. The vector data refers to data having a format in which one or more objects such as points, lines, or circles, rectangles included in the component are expressed, for example, as a set of type information such as "point" or "line" and one or more numerical values representing coordinates, length, direction, or the like. The vector data is, for example, data of Illustrator (registered trademark), Photoshop (registered trademark), or the like, but the type is not limited.

The vector data is transformed to bitmap data using a rendering unit 133 described below and is then output to a printer or the like. The bitmap data has the same meaning as "raster data", and may be, for example, "a set of pixels" . The pixel is a minimum unit of an image and has, for example, color information such as RGB or YUV. The bitmap data includes, for example, a GIF or JPEG format, but its type is not limited.

Alternatively, the component information may be, for example, originally the bitmap data. Two or more pieces of component information included in one printed matter may include both vector format component information and bitmap format component information. In this case, the rendering unit 133 described below may perform rendering for transformation to the bitmap format only for the vector format component information and may not necessarily perform the following rendering for the component information originally having the bitmap format. However, the rendering unit 133 may perform one or more types of processings, for example, out of transformation to another type of bitmap format or adjustment of image quality for the bitmap format component information.

One or two or more pieces of component images are stored in the component image storage unit 113. The component image includes, for example, a set of pixels as described below. The component image may be, specifically, the bitmap data described above.

The component image storage unit 113 may store, for example, two or more component images corresponding to two or more pieces of component information stored in the component information storage unit 112. The two or more component images stored in the component image storage unit 113 may include, for example, two or more images obtained by rendering two or more pieces of component information using the rendering unit 133 described below.

The processing unit 13a executes various processings. Various processings include, for example, the processings in the aforementioned component information accumulation unit 131, the printed matter construction unit 132a described below, the rendering unit 133 described below, the component image accumulation unit 134 described below, and the like.

The rendering unit 133 performs rendering. The rendering may include, for example, one or more processes out of a process of transforming vector data into bitmap data, a process of transforming a certain type of bitmap data into another type of bitmap data, a process of adjusting image quality, and a process of deploying a processing result to a frame memory, or the like.

Typically, the rendering unit 133 performs rendering for each component. "For each component" means that the rendering is performed for each of one or two or more pieces of component information. The rendering unit 133 performs rendering, for example, for each of one or more pieces of the component information stored in the component information storage unit 112 to acquire one or more component images of the components.

The rendering unit 133 performs rendering for the component information to acquire component images corresponding to this component information, for example, as the component-related information receiving unit 121 receives the component information, or as the component information accumulation unit 131 accumulates the component information.

Alternatively, the rendering unit 133 preferably determines whether or not rendering is performed for each of one or more pieces of component information on the basis of a rendering condition and performs the rendering for the component information as the rendering condition is satisfied.

The rendering condition is a condition for determining whether or not the rendering is performed. The rendering condition may include, for example, a condition regarding a timing. The condition regarding the timing may include, for example, a fact that the component information accumulation unit 131 accumulates the component information even when the component-related information receiving unit 121 receives the component information or the timing information described below. The condition regarding the timing may include, for example, a fact that a set time has come, a fact that information acquired from the outside satisfies a condition, and the like. The fact that the information acquired from the outside satisfies the condition includes, for example, a fact that news information or weather information acquired from a server (not shown) satisfies a condition, a fact that a mail containing an order message is received, or the like.

The rendering condition may include, for example, a condition regarding quantity of the received component information. The condition regarding quantity may include, for example, a fact that components of x% or more or more than x% of two or more pieces of component information necessary to construct a complete printed matter are received or accumulated, or a condition similar to the incomplete printed matter construction condition of the aforementioned embodiment. The condition regarding quantity may include, for example, a fact that a data size of the accumulated component information is equal to or larger than "y MB" or the like. In addition, the condition regarding quantity may include, for example, a fact that the number of pieces of component information is large sufficient to satisfy a condition.

The rendering condition may include, for example, a condition regarding the attribute value of the component. In this case, the rendering unit 133 may perform rendering or may not perform rendering depending on the attribute values of each component.

The attribute value refers to information representing an attribute of the component. The attribute value may include, for example, a data type, a data amount, an update date, a period of time necessary for the rendering, or the like. The data type is information representing a format of the component information. The data type may include, for example, text data, image data, vector data, bitmap data, and the like. The data amount is information representing a data amount of the component information. One or more types of information of the data type or the data amount is included, for example, in each of one or more pieces of component information stored in the component information storage unit 112. Note that the time necessary to perform rendering is the time necessary to perform rendering for the component information and may be calculated, for example, on the basis of the data type and the data amount.

Specifically, in a case where the attribute value is set to the data type, the rendering condition may include, for example, a condition that "If the data type of the component information is image data, rendering is performed immediately after receiving or accumulating the component information. In the case of text data, rendering is performed after receiving or accumulating the last component information". In addition, the rendering condition may include, for example, a condition that "in the case of vector data of the image data, rendering such as transformation to bitmap data and adjustment of image quality is performed. In the case of bitmap, rendering except for transformation to the bitmap data is performed". In addition, the rendering condition may include, for example, a condition that "In a case where the data type of the component information is vector data or text data, rendering is performed immediately after receiving or accumulating the component information. In the case of other data types, rendering is performed after receiving or accumulating the last component information" . In addition, in a case where the attribute value is the data type, the rendering condition may include, for example, a condition that "if a blend mod of the image is designated as the attribute value, rendering is performed immediately after receiving or accumulating the component information".

In a case where the attribute value is the data amount, the rendering condition may include, for example, a condition that "The rendering is performed if the data amount of the component information is equal to or larger than a threshold value. The rendering is performed after receiving or accumulating the last component information if the data amount is equal to or smaller than the threshold value", and the like.

In a case where the attribute value is time necessary for rendering, the rendering condition may include, for example, a condition that "The rendering is performed if the time necessary for the rendering of the component information is equal to or longer than a threshold value. The rendering is performed after receiving or accumulating the last component information if the time necessary for the rendering is equal to or shorter than the threshold value", and the like.

In a case where the attribute value is the data amount, the rendering condition is that the data amount of the received component information is large enough to satisfy a predetermined condition (for example, the data amount is equal to or larger than "1 MB") and that the data amount is small enough to satisfy a predetermined condition (for example, the data amount is equal to or smaller than "1 KB").

The attribute value may include an attribute value of the text included in the component information. The attribute value of the text may include, for example, a language of the text data, a fact that the text data are distributed across a plurality of pages, a fact that a specific character string (for example, "male") is included, and the like.

The rendering condition may be a condition using information based on an analysis result of the image. The rendering condition may include, for example, a fact that "a person in an image has a smile face as a result of the image analysis for the image as the component information".

In a case where the attribute value is an update date, the rendering condition may include, for example, a fact that "the update date of the component information is later than a specific date, " a fact that "the update date of the component information has passed X days or more", or the like.

The rendering condition may include, for example, a fact that there is component information in a combination of databases (not shown) (that may exist in an external server), a fact that the component information matches data of the database, or the like.

The rendering unit 133 may determine whether or not rendering of the component information is performed, for example, as the component information is received or accumulated.

The rendering unit 133 holds a flag paired with each of one or more pieces of component information stored in the component information storage unit 112 to indicate whether or not rendering has been performed. Preferably, after determining whether or not rendering of the component information is performed as the component information is received or accumulated as described above, the rendering unit 133 determines whether or not rendering is performed for each of one or more pieces of component information stored in the component information storage unit 112 by referencing the flag paired with the component information.

The rendering unit 133 may hold, for example, timing information indicating a timing for performing the determination and perform the determination based on this timing information in addition to or instead of the determination responding to receiving or accumulating the component information as described above.

In a case where one component identifier appears in one or two or more pieces of printed matter construction information several times, the rendering condition may include a condition that the rendering unit 133 performs rendering once for the component information identified by the one component identifier, and does not perform the rendering for other pieces of component information identified by the one component identifier. That is, needless to say, information on one image subjected to the rendering may be repeatedly used in one or two or more printed matters.

The component image accumulation unit 134 accumulates the component image in the component image storage unit 113. The component image accumulation unit 134 accumulates, for example, the component image acquired by the rendering unit 133 in the component image storage unit 113 in association with the component identifier paired with this component image.

Basically, the printed matter construction unit 132a constructs the printed matter in the same sequence as that of the printed matter construction unit 132 across all of the examples. That is, the printed matter construction unit 132a may construct the complete printed matter after all pieces of component information are prepared. In addition, the printed matter construction unit 132a may construct the incomplete printed matter before all pieces of component information are prepared.

However, the printed matter construction unit 132a does not perform any rendering for each printed matter or for each page when the complete printed matter or the incomplete printed matter is constructed. Instead, the printed matter construction unit 132a constructs the complete printed matter or the incomplete printed matter by combining two or more component images stored in the component image storage unit 113 as a result of the processings of the rendering unit 133 and the component image accumulation unit 134 described below.

Specifically, the printed matter construction unit 132a may acquire two or more component images from the component image storage unit 113 and combine them to construct the printed matter identified by the printed matter identifier after all of two or more pieces of component information included in the printed matter identified by the printed matter identifier contained in the printed matter construction information stored in the printed matter construction information storage unit 111 are prepared.

According to this embodiment, one or more component images corresponding to one or more pieces of component information identified by the printed matter identifier are stored in the component image storage unit 113 before all pieces of component information are prepared. Therefore, the printed matter construction unit 132a may construct the incomplete printed matter by combining one or more component images stored in the component image storage unit 113.

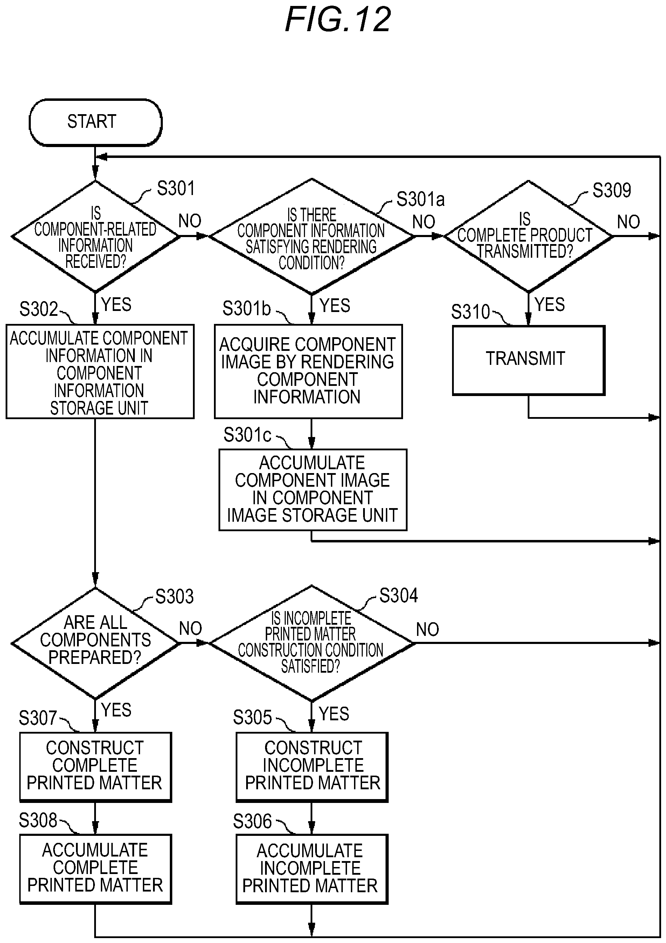

Next, operations of the print server device 1a will be described with reference to the flowchart of Fig. 12. Note that this flowchart is different from that of Fig. 3 in that steps S301a to S301c executed when it is determined "NO" in step S301 are added.

(Step S301) The processing unit 13a determines whether or not the component-related information receiving unit 121 receives the component-related information from the terminal device 2. If it is determined that the component-related information receiving unit 121 receives the component-related information from the terminal device 2, the process advances to step S302. Otherwise, the process advances to step S301a.

(Step S301a) The rendering unit 133 determines whether or not there is component information satisfying the rendering condition. If there is component information satisfying the rendering condition, the process advances to step S301b. Otherwise, the process advances to step S309.

(Step S301b) The rendering unit 133 performs rendering for the component information to acquire a component image.

(Step S301c) The component image accumulation unit 134 accumulates the component image acquired by the rendering unit 133 in the component image storage unit 113 in association with the component identifier paired with this component image. Then, the process returns to step S301.

The processings subsequent to step S302 are similar to those of Fig. 3 except for the following points. Specifically, in step S307, the printed matter construction unit 132a combines two or more component images stored in the component image storage unit 113 to construct a complete printed matter. In addition, in step S305, the printed matter construction unit 132a combines one or more component images stored in the component image storage unit 113 to construct an incomplete printed matter.

Next, a specific operation example of the print system according to this embodiment will be described. This operation example is similar to that of the first embodiment except for the following points.

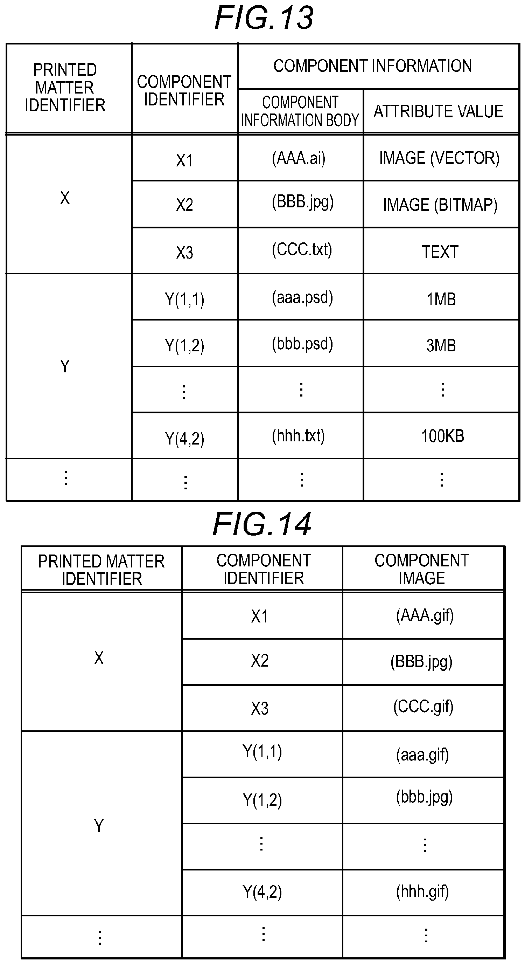

The component information storage unit 112 stores one or more pieces of component information as illustrated in Fig. 13 for each printed matter in association with the component identifiers. The component information has, for example, a component information body and an attribute value. The component information body is a file containing image data, text data, or the like and is associated with a file identifier such as "AAA.ai" or "CCC.txt". The attribute value includes, for example, an attribute value regarding the data type, an attribute value regarding the data amount, or the like.

The "one or more pieces of component information for each printed matter" include, for example, three pieces of component information identified by the component identifiers "X1 to X3" corresponding to the printed matter identifier "X" and eight pieces of component information identified by the component identifiers "Y(1, 1) to Y(4, 2)" corresponding to the printed matter identifier "Y".

Out of the three pieces of component information, for example, the component information identified by the component identifier "X1" has a component information body "AAA.ai" and an attribute value "image (vector)" regarding the data type. The "ai" is a filename extension corresponding to "Illustrator (registered trademark)", and the "image (vector)" is an attribute value representing vector format image data. Similarly, the component information identified by the component identifier "X2" has a component information body "BBB.jpg" and an attribute value "image (bitmap)" regarding the data type. The "image (bitmap)" is an attribute value representing bitmap format image data. The component information identified by the component identifier "X3" has a component information body "CCC.txt" and an attribute value "text" regarding the data type.

Out of the eight pieces of component information, the component information identified by the component identifier "Y(1, 1)" has a component information body "aaa.psd" and an attribute value "1 MB" regarding the data amount. The "psd" is a filename extension corresponding to "Photoshop (registered trademark)", and the "1 MB" represents that the data amount of the component information is "1 MB". Similarly, the component information identified by the component identifier "Y (4, 2)" has a component information body "bbb.psd" and an attribute value "3 MB" regarding the data amount. The component information identified by the component identifier "Y(4, 2)" has a component information body "hhh.txt" and an attribute value "100 KB" regarding the data amount.

The component image storage unit 113 stores one or more component images for each printed matter in association with the component identifier, for example, as illustrated in Fig. 14. The "one or more component images for each printed matter" include, for example, three component images paired with three pieces of component information identified by the component identifiers "X1 to X3" corresponding to the printed matter identifier "X", eight component images paired with eight pieces of component information identified by the component identifiers "Y(1, 1) to Y (4, 2)" corresponding to the printed matter identifier "Y", and the like.

The three component images include, for example, a component image "aaa.gif" obtained by rendering the component information body "AAA.ai" included in the component information identified by the component identifier "X1", a component image "BBB.jpg" similar to the component information body "BBB.jpg" included in the component information identified by the component identifier "X2", and a component image "CCC.gif" obtained by rendering the component information body "CCC.txt" included in the component information identified by the component identifier "X3". Note that the "gif" is a filename extension corresponding to "GIF".

The eight pieces of component images include, for example, a component image "aaa.gif" obtained by rendering the component information body "aaa.psd" included in the component information identified by the component identifier "Y (1, 1)", a component image "bbb.gif" obtained by rendering the component information body "bbb.psd" included in the component information identified by the component identifier "Y (1, 2)", ..., and a component image "hhh.gif" obtained by rendering the component information body "hhh.txt" included in the component information identified by the component identifier "Y(4, 2) ".

At this time point, the component information storage unit 112 only stores the printed matter identifiers (such as "X" and "Y") and the component identifiers (such as "X1 to X3" and "Y(1, 1) to Y(4, 2)" and does not yet store the component information. Similarly, the component image storage unit 113 only stores the printed matter identifiers and the component identifiers and does not yet store the component image. Note that the stored printed matter identifiers and the stored component identifiers are information acquired from the printed matter construction information storage unit 111.

It is assumed that, at this time, the terminal device 2 transmits the component-related information having the component identifier "X1" and the component information "AAA.ai" (hereinafter, also referred to as "first component-related information") to the print server device 1.

In the print server device 1a, the component-related information receiving unit 121 receives the first component-related information, and the component information accumulation unit 131 accumulates the component information (the first component information) having the component information body "AAA.ai" and the attribute value "image (vector)" in the component information storage unit 112 in association with the component identifier "X1".

Note that the component information accumulation unit 131 holds, for example, association information as a set of pairs of the filename extension included in the file identifier and the attribute value regarding the data type. The set of pairs of the filename extension and the attribute value includes, for example, a pair of "ai" and "image (vector)", a pair of "jpg" and "image (bitmap)", a pair of "txt" and "text", and the like. The component information accumulation unit 131 may acquire the attribute value "image (vector)" paired with the filename extension "ai" of the received component information body "AAA.ai" using this association information.

Meanwhile, the rendering unit 133 holds, for example, the rendering condition regarding the data type, the rendering condition regarding the data amount, and the like. The rendering condition regarding the data type is a condition that "If the data type of the component information is vector format image data, the rendering is performed immediately after receiving or accumulating the component information. In the case of the text data, the rendering is performed after receiving or accumulating the last component information. In the case of the bitmap, the rendering is performed after transformation from the vector format to the bitmap format". The rendering condition regarding the data amount is a condition that "the rendering is performed if the data amount of the component information is equal to or larger than a threshold value of "2 MB". The rendering is performed after receiving or accumulating the last component information or when the incomplete printed matter construction condition is satisfied if the data amount of the component information is equal to or smaller than the threshold value of "2 MB"".

The rendering unit 133 determines whether or not there is component information satisfying the rendering condition as the first component-related information is received, or the first component information is accumulated. Here, since the first component information is the vector format image data, the rendering unit 133 performs rendering for the component information body "AAA.ai" immediately after receiving or accumulating to acquire the component image "AAA.gif".

The component image accumulation unit 134 accumulates the component image "AAA.gif" acquired by the rendering unit 133 in the component image storage unit 113 in association with the component identifier "X1" paired with this component image.

For example, it is assumed that, after two hours, the terminal device 2 transmits the component-related information (second component-related information) having the component identifier "X2" and the component information "BBB.jpg" to the print server device 1.

In the print server device 1a, the component-related information receiving unit 121 receives the second component-related information, and the component information accumulation unit 131 accumulates the component information (second component information) having the component information body "BBB.jpg" and the attribute value "image (bitmap)" in the component information storage unit 112 in association with the component identifier "X2".

The rendering unit 133 determines whether or not there is component information satisfying the rendering condition as the second component-related information is received, or the second component information is accumulated. Here, since the second component information is the bitmap format image data, the rendering unit 133 only adjusts the image quality or the like without performing transformation from the vector format to the bitmap format to acquire the component image "BBB.jpg" similar to that of the second component information.

The component image accumulation unit 134 accumulates the component image "BBB.jpg" acquired by the rendering unit 133 in the component image storage unit 113 in association with the component identifier "X2" paired with this component image.

Meanwhile, the printed matter construction unit 132a holds, as the incomplete printed matter construction condition, a condition that "the incomplete printed matter is constructed at the time point that one pieces of non-stored component information is left". At this time point, the component information storage unit 112 stores two pieces of component information identified by the component identifiers "X1" and "X2" out of three pieces of component information for constructing the complete printed matter X. For this reason, the printed matter construction unit 132a determines that one pieces of the non-stored component information is left for the printed matter X, and the incomplete printed matter construction condition is satisfied. In this regard, the printed matter construction unit 132a acquires two component images "AAA.gif" and "BBB.jpg" corresponding to two pieces of component information identified by the component identifiers "X1" and "X2" from the component image storage unit 113, and combines the two component images to construct an incomplete printed matter X.

It is assumed that, for example, after one hour, the terminal device 2 transmits the component-related information (third component-related information) having the component identifier "32" and the component information "CCC.txt" to the print server device 1.

In the print server device 1a, the component-related information receiving unit 121 receives the third component-related information, and the component information accumulation unit 131 accumulates the component information (third component information) having the component information body "CCC.txt" and the attribute value "text" in the component information storage unit 112 in association with the component identifier "X3".

The rendering unit 133 determines whether or to there is component information satisfying the rendering condition as the third component-related information is received, or the component information is accumulated. Here, since the third component information is the text data, the rendering unit 133 determines that rendering is performed after the last component information is received or accumulated on the basis of the rendering condition. However, since the third component information is the last component information, the rendering unit 133 determines that the rendering condition is satisfied at this time point, and performs rendering for the component information body "CCC.txt" to acquire the component image "CCC.gif".

The component image accumulation unit 134 accumulates the component image "CCC.gif" acquired by the rendering unit 133 in the component image storage unit 113 in association with the component identifier "X3" paired with this component image.

As a result, the component information storage unit 112 stores all of three pieces of component information for constructing the complete printed matter X, and the component image storage unit 113 stores three component images corresponding to the three pieces of component information. In this regard, the printed matter construction unit 132a determines that all pieces of component information are prepared for the printed matter X, and acquires three pieces of component information from the component image storage unit 113. In addition, the printed matter construction unit 132a combines the three acquired component images to construct a complete printed matter X.

In this manner, the rendering is performed for each component to accumulate the component images before all of three pieces of component information for constructing the complete printed matter X are prepared. Therefore, it is possible to shorten the time for constructing the printed matter X after all pieces of component information are prepared. Similarly, it is also possible to shorten the time for constructing the incomplete printed matter.

Note that the processing for the printed matter Y is performed as follows. This processing is similar to the aforementioned processing regarding the printed matter X except that the rendering condition for determination for each piece of component information is the rendering condition regarding the data amount.

At this time, it is assume that the terminal device 2 transmits the component-related information (first component-related information) having the component identifier "Y(1, 1)" and the component information "aaa.psd" to the print server device 1a.

In the print server device 1a, the component-related information receiving unit 121 receives the first component-related information, and the component information accumulation unit 131 accumulates the component information (first component information) having the component information body "aaa.psd" ad the attribute value "1 MB" in the component information storage unit 112 in association with the component identifier "Y(1, 1)". Note that the component-related information typically also contains information representing the data amount of the component information. The component information accumulation unit 131 may acquire, for example, the data amount "1 MB" from the first component-related information and set it as the attribute value.

The rendering unit 133 determines whether or not there is component information satisfying the rendering condition as the first component-related information is received, or the first component information is accumulated. Here, since the data amount of the first component information is set to "1 MB", the rendering unit 133 determines that the rendering is performed after receiving or accumulating the last component information or when the incomplete printed matter construction condition is satisfied using the rendering condition regarding the data amount, and does not perform the rendering at this time point.

For example, it is assumed that the terminal device 2 transmits the component-related information (second component-related information) having the component identifier "Y2" and the component information "bbb.jpg" to the print server device 1 after 30 minutes.

In the print server device 1a, the component-related information receiving unit 121 receives the second component-related information, and the component information accumulation unit 131 accumulates the component information (second component information) having the component information body "bbb.psd" and the attribute value "3 MB" in the component information storage unit 112 in association with the component identifier "Y2".

The rendering unit 133 determines whether or not there is component information satisfying the rendering condition as the second component-related information is received, or the second component information is accumulated. Here, since the data amount of the second component information is set to "3 MB", the rendering unit 133 determines the rendering condition regarding the data amount is satisfied, and performs rendering for the component information body "bbb.psd" to acquire the component image "bbb.gif".

The component image accumulation unit 134 accumulates the component image "bbb.gif" acquired by the rendering unit 133 in the component image storage unit 113 in association with the component identifier "Y(1, 2)" paired with this component image.

Then, the terminal device 2 transmits the third and subsequent pieces of component-related information at suitable time intervals. In the print server device 1a, the component-related information receiving unit 121 receives each of the third and subsequent pieces of component-related information, and the component information accumulation unit 131 accumulates each of the third and subsequent pieces of component information in the component information storage unit 112. The rendering unit 133 determines whether or not the data amount of the component information satisfies the rendering condition as each of third and subsequent pieces of component-related information is received, or each of third and subsequent pieces of component information is accumulated, and performs rendering for the component information satisfying the rendering condition to acquire the component image. The component image accumulation unit 134 accumulates the acquired component image in the component image storage unit 113 in association with the component identifier paired with this component image.

Then, the terminal device 2 transmits the eighth and subsequent pieces of component-related information. In the print server device 1a, the component-related information receiving unit 121 receives the eighth and subsequent pieces of component-related information, and the component information accumulation unit 131 accumulates the eighth component-related information in the component information storage unit 112. The rendering unit 133 determines whether or not the data amount of the eighth component information satisfies the rendering condition as the eighth component-related information is received, or the eighth component information is accumulated. Here, since the data amount of the eighth component information is set to "1 MB", the rendering unit 133 determines that the rendering is not performed at this time point using the rendering condition regarding the data amount. However, since the eighth component information is the last component information, the rendering unit 133 determines that rendering is performed, and performs the rendering for the component information body "hhh.txt" to acquire the component image "hhh.gif". In addition, the rendering unit 133 acquires the component information such as "aaa.psd" that has not rendered from the component information storage unit 112. Furthermore, the rendering unit 133 performs rendering for the acquired component information such as "aaa.psd" to acquire the component image such as "aaa.gif".

The component image accumulation unit 134 accumulates the acquired component images such as "hhh.gif" and "aaa.gif" in the component image storage unit 113 in association with the component identifiers "Y(4, 2)" and "Y(1, 1)" paired with the component images.

As a result, the component information storage unit 112 stores all of the eight pieces of component information for constructing the complete printed matter Y, and the component image storage unit 113 stores eight component images corresponding to the eight pieces of component information. In this regard, the printed matter construction unit 132a determines that all pieces of component information are prepared for the printed matter Y and acquires eight pieces of component information from the component image storage unit 113. In addition, the printed matter construction unit 132a combines the eight acquired component images to construct a complete printed matter Y.

In this manner, rendering is performed for each component, and the component image is accumulated before all of eight pieces of component information for constructing the complete printed matter Y are prepared. Therefore, it is possible to shorten the time for constructing the printed matter Y after all pieces of component information are prepared.

Note that, in a case where the incomplete printed matter construction condition is satisfied before all pieces of component information are prepared, the printed matter construction unit 132a combines one or more pieces of component information stored in the component image storage unit 113 at that time point to construct the incomplete printed matter Y. As a result, it is also possible to shorten the time for constructing the incomplete printed matter Y.

As described above, according to this embodiment, the recording medium includes the component information storage unit 112 that stores two or more pieces of component information in association with the printed matter identifier for identifying one printed matter, and a component image storage unit 113 that stores two or more component images corresponding to the two or more pieces of component information. In the print server device 1a, rendering is performed for each of one or more pieces of component information stored in the component information storage unit 112 to acquire the component image as an image of the component, and the acquired component images are accumulated in the component image storage unit 113. In addition, the two or more component images stored in the component image storage unit 113 are combined to construct the printed matter. Therefore, it is possible to expeditiously construct a complete printed matter after all pieces of component information are prepared.

The print server device 1a determines whether or not rendering is performed for this component information on the basis of the rendering condition as a condition for performing the rendering. In addition, the rendering for this component information is performed to acquire a component image as the rendering condition is satisfied. Therefore, it is possible to shorten the time for constructing a complete product after all pieces of component information are prepared.

The rendering condition includes a condition regarding timings. The print server device 1a receives the component identifier and each of two or more pieces of component-related information having component information identified by the component identifier at different timings, and accumulates the component information included in the received component-related information in the component information storage unit in association with the component identifier paired with this component information. Rendering for the component information is performed as the component information is received, or the component information accumulation unit accumulates the component information. Therefore, the rendering is performed at timings as fast as possible. Therefore, it is possible to shorten the time for constructing a complete product after all pieces of component information are prepared.

The rendering condition includes a condition regarding the attribute value of the component. The print server device 1a may perform rendering or may not perform rendering depending on the attribute value of the component. Therefore, it is possible to suitably perform rendering in advance depending on the attribute value of the component.

The recording medium further includes the printed matter construction information storage unit 111 that stores the printed matter construction information including a printed matter identifier and two or more component identifiers for identifying the component information for constructing the printed matter identified by the printed matter and representing a construction of the complete printed matter. The print server device 1a constructs an incomplete printed matter by combining one or more component images that are stored in the component image storage unit 113 and correspond to one or more pieces of component information identified by the printed matter identifier before all pieces of component information included in the printed matter identified by the printed matter identifier contained in the printed matter construction information as component information corresponding to two or more component identifiers paired with the printed matter identifier contained in the printed matter construction information are prepared. Therefore, it is possible to shorten the time for constructing a complete product after all pieces of component information are prepared.

Note that software that implements an information processing device according to this embodiment includes, for example, the following program. That is, a recording medium accessible by a computer includes a component information storage unit 112 that stores two or more pieces of component information in association with the printed matter identifier for identifying one printed matter, and a component image storage unit 113 that stores two or more component images corresponding to two or more pieces of component information. This program causes the computer to function as a rendering unit 133 that performs rendering for each of one or more pieces of component information stored in the component information storage unit 112 to acquire a component image as an image of the component, a component image accumulation unit 134 that accumulates the component image acquired by the rendering unit 133 in the component image storage unit 113, and a printed matter construction unit 132a that combines two or more component images stored in the component image storage unit 113 to construct a printed matter.

Various changes may be possible for the invention without limiting to the aforementioned embodiments, and they are also regarded as being included in the scope of the invention.

As described above, the print server device according to the invention is useful as a print server device or the like because it is possible to expeditiously construct a complete printed matter after all of two or more pieces of component information included in one printed matter are prepared.

## Claims

1. A print server device comprising:
a printed matter construction information storage unit that stores printed matter construction information representing a construction of a complete printed matter, the information containing a printed matter identifier for identifying one printed matter and two or more component identifiers for identifying component information for constructing the printed matter identified by the printed matter identifier;
a component information storage unit that stores two or more pieces of component information in association with the printed matter identifier;
a component-related information receiving unit that receives each of two or more pieces of component-related information having a component identifier and component information identified by the component identifier at different timings;
a component information accumulation unit that accumulates component information contained in the component-related information received by the component-related information receiving unit in the component information storage unit in association with the component identifier paired with the component information; and
a printed matter construction unit that constructs an incomplete printed matter using one or more pieces of component information stored in the component information storage unit and identified by the printed matter identifier before all pieces of component information that are included in the printed matter identified by the printed matter identifier contained in the printed matter construction information and correspond to the two or more component identifiers paired with the printed matter identifier contained in the printed matter construction information are prepared.

2. The print server device according to claim 1, wherein the printed matter construction unit determines whether or not an incomplete printed matter is constructed on the basis of an incomplete printed matter construction condition as a condition for constructing the incomplete printed matter, and constructs the incomplete printed matter as the incomplete printed matter construction condition is satisfied.

3. The print server device according to claim 2, wherein the printed matter construction unit determines whether or not all pieces of component information included in the printed matter are prepared using the printed matter construction information, and constructs a complete printed matter using all pieces of component information when all pieces of the component information included in the printed matter are prepared.

4. The print server device according to claim 2, wherein the printed matter construction unit determines whether or not the incomplete printed matter construction condition is satisfied when all pieces of the component information are not prepared, and
the printed matter construction unit constructs the incomplete printed matter when the incomplete printed matter construction condition is satisfied.

5. The print server device according to claim 2, wherein the incomplete printed matter construction condition includes a condition regarding the number of pieces of the component information received by the component-related information receiving unit or the number of pieces of the component information stored in the component information storage unit, out of the component information included in the printed matter identified by printed matter identifier.

6. The print server device according to claim 5, wherein the incomplete printed matter construction condition includes a condition that the number of pieces of non-stored or non-received component information is equal to or smaller than "i" (where "i" denotes a natural number smaller than a total number of component information included in the printed matter).

7. The print server device according to claim 2, wherein the incomplete printed matter construction condition includes a condition that the component-related information receiving unit receives the component-related information.

8. The print server device according to claim 2, wherein the printed matter has a fixed region and a variable region, and
the incomplete printed matter construction condition includes a condition that component information contained in the component-related information received by the component-related information receiving unit is only the component information corresponding to the fixed region.

9. The print server device according to claim 1, wherein the printed matter has a fixed region and a variable region, and
the printed matter construction unit constructs two or more incomplete printed matters for each of the two or more pieces of component information by arranging each of the two or more pieces of component information in the variable region.

10. The print server device according to claim 2, wherein the incomplete printed matter construction condition includes a condition regarding the printed matter, and
the printed matter construction unit constructs an incomplete printed matter or does not construct the incomplete printed matter depending on the printed matter.

11. The print server device according to claim 10, wherein the printed matter construction information has an attribute value of the printed matter,
the incomplete printed matter construction condition includes a condition regarding an attribute value of the printed matter, and
the printed matter construction unit constructs an incomplete printed matter or does not construct the incomplete printed matter depending on the attribute value of the printed matter.

12. The print server device according to claim 1, wherein the printed matter construction unit constructs a complete printed matter using a lastly constructed incomplete printed matter and component information contained in component-related information lastly received by the component-related information receiving unit.

13. A printed matter construction method using a recording medium accessible by a computer and provided with a printed matter construction information storage unit that stores printed matter construction information for constructing a complete printed matter, the information containing a printed matter identifier for identifying one printed matter and two or more component identifiers for identifying component information for constructing a printed matter identified by the printed matter identifier, and a component information storage unit that stores two or more pieces of the component information in association with the printed matter identifier,
the computer implementing a component-related information receiving unit, a component information accumulation unit, and a printed matter construction unit,
the printed matter construction method comprising:
a component-related information receiving step using the component-related information receiving unit to receive each of two or more pieces of component-related information having a component identifier and component information identified by the component identifier at different timings;
a component information accumulating step using the component information accumulation unit to accumulate the component information contained in the component-related information received by the component-related information receiving unit in the component information storage unit in association with the component identifier paired with the component information; and
a printed matter construction step using the printed matter construction unit to construct an incomplete printed matter using one or more pieces of component information stored in the component information storage unit and identified by the printed matter identifier before all pieces of component information that are included in the printed matter identified by the printed matter identifier contained in the printed matter construction information and correspond to two or more component identifiers paired with the printed matter identifier contained in the printed matter construction information are prepared.

14. A recording medium accessible by a computer and provided with a printed matter construction information storage unit that stores printed matter construction information for constructing a complete printed matter, the information containing a printed matter identifier for identifying one printed matter and two or more component identifiers for identifying component information for constructing a printed matter identified by the printed matter identifier, and a component information storage unit that stores two or more pieces of the component information in association with the printed matter identifier,
the recording medium storing a program that causes the computer to function as:
a component-related information receiving unit that receives each of two or more pieces of component-related information having a component identifier and component information identified by the component identifier at different timings;
a component information accumulation unit that accumulates the component information contained in the component-related information received by the component-related information receiving unit in the component information storage unit in association with the component identifier paired with the component information; and
a printed matter construction unit that constructs an incomplete printed matter using one or more pieces of the component information stored in the component information storage unit and identified by the printed matter identifier before all pieces of component information that are included in the printed matter identified by the printed matter identifier contained in the printed matter construction information and correspond to the two or more component identifiers paired with the printed matter identifier contained in the printed matter construction information are prepared.

15. The print server device according to claim 1, further comprising:
a component image storage unit that stores two or more component images corresponding to the two or more pieces of component information;
a rendering unit that performs rendering for each of one or more pieces of component information stored in the component information storage unit to acquire a component image as an image of the component; and
a component image accumulation unit that accumulates the component image acquired by the rendering unit in the component image storage unit,
wherein the printed matter construction unit combines two or more component images stored in the component image storage unit to construct a printed matter.

16. The print server device according to claim 15, wherein the rendering unit determines whether or not rendering is performed for the component information on the basis of a rendering condition as a condition for performing rendering, and performs rendering for the component information to acquire the component image as the rendering condition is satisfied.

17. The print server device according to claim 16, wherein the rendering condition is a condition regarding a timing.

18. The print server device according to claim 16 or 17, wherein the rendering condition includes a condition regarding an attribute value of the component, and
the rendering unit performs rendering or does not perform rendering depending on the attribute value of the component.
